# EUROPEAN PATENT SPECIFICATION

(11) **EP 2 943 332 B1**
(45) Date of publication and mention of the grant of the patent: **07.09.2016**
(21) Application number: 14738642.9
(22) Date of filing: 03.07.2014
(51) Int. Cl.: B31D 3/02, B29D 99/00

(54) **COMPOSITE HONEYCOMB AND METHOD OF PRODUCING A COMPOSITE HONEYCOMB**
VERBUNDSTOFFWABENSTRUKTUR UND VERFAHREN ZU DESSEN HERSTELLUNG
NID D'ABEILLE COMPOSITE ET PROCÉDÉ POUR SA FABRICATION

(30) Priority: 05.07.2013 EP 13175409; 05.07.2013 EP 13175418
(43) Date of publication of application: 18.11.2015
(73) Proprietor: EIG Equipement Industriel SA, 1305 Penthalaz (CH)
(72) Inventor: GAUTHIER, Gérard, CH-1169 Yens (CH); MORDASINI, François, CH-1009 Pully (CH)
(74) Representative: Ganguillet, Cyril
(86) International application number: PCT/IB2014/062825
(87) International publication number: WO 2015/001509

(56) References cited:
- DE-C1- 19 532 850

## Description

### Field of the invention

The present invention relates to a composite honeycomb. In particular, the composite honeycomb, object of the invention, comprises a plurality of cells each of substantially hexagonal cross-section and wherein each wall of said cells are substantially of the same thickness.

The present invention relates also to a method of producing a composite honeycomb. In particular, said method, object of the invention, allows to produce a composite honeycomb formed of a plurality of honeycomb cells each of substantially hexagonal cross-section and wherein each wall of said honeycomb cells are substantially of the same thickness.

### Background of the invention

Sandwich-structures comprising skins and a honeycomb core are well known and widely used in many applications where high stiffness and lightweight material are required. In particular, the combined features of stiffness and lightweight make the sandwich-structures comprising skins and a honeycomb core particularly well-suited for applications such as motor racing vehicles, boats, helicopter, train, aircrafts and spacecrafts.

Traditionally, honeycombs are made from aluminum because of its low-weight properties. Nevertheless, the use of aluminum also results in problems: Firstly, the use of aluminum leads to an easily damaged and easily crumpled structure when subjected to handling and manufacturing. Secondly, a sandwich-structure comprising a honeycomb core made of aluminum is subjected to warping. Indeed, the skins of a sandwich-structure are traditionally made of composite material, in particular made of carbon fiber-reinforced material, thus resulting in a different coefficient of expansion between the honeycomb core and the skins of the sandwich-structure. Such risk of warping cannot be tolerated in applications enduring significant temperature differences such as motor racing vehicles, boats, helicopter, train, aircrafts and spacecrafts. Thirdly, aluminum is subject to galvanic corrosion. Therefore, a sandwich-structure comprising a honeycomb core made of aluminum is not reliable over time.

For avoiding the above-mentioned aluminum drawbacks and to take benefit from their mechanical properties, composite materials, in particular fiber-reinforced material, are known to be used for manufacturing composite honeycombs. Nevertheless, the walls of each cell of traditional composite honeycomb are not of the same thickness. The non uniformity in walls thickness makes the traditional composite honeycomb anisotropic, meaning different mechanical properties in different directions. Said mechanical properties are in particular deformability properties and expansion properties. Indeed, in traditional composite honeycomb, two walls of each hexagonal cell comprise parts of two sheets brought into contact while the other four walls comprise part of a single sheet. Therefore, said two walls are of double-thickness while said other four walls are of single-thickness. Indeed, the traditional method of producing said traditional composite honeycomb, commonly referred to as a corrugation process (see US patent number 5,030,305), is based on the assembly of corrugated composite sheets, said sheets being corrugated in such a manner that they define the outline of half of adjacent hexagonal honeycomb cells. Once corrugated, the sheets are stacked, aligned and bonded to form a composite honeycomb. By the use of said traditional method, two walls of each hexagonal cell are made of parts of two corrugated sheets brought into contact the other four walls are made of a part of a single corrugated sheet. Therefore, said two walls are of double-thickness while said other four walls are of single-thickness. At this stage, one should point out that the terms "double-thickness" and "single-thickness" are relative terms, not absolute, since single corrugated sheet can comprise a single or a plurality of plies made of fiber-reinforced material. For example and in the case that a honeycomb would be produced by stacking corrugated sheets comprising each two plies, said "double-thickness" term refers to walls of double-thickness comprising each parts of two corrugated sheets and therefore four plies while said "single-thickness" term refers to walls of single-thickness comprising each a part of one corrugated sheet and therefore two plies. Such anisotropic composite honeycomb cannot be tolerated in applications where mechanical properties have to be uniform in all directions in the plane of the honeycomb, meaning in the plane perpendicular to the thickness direction of the honeycomb. Moreover, anisotropic properties can lead to the warping of the composite honeycomb when said composite honeycomb is subjected to temperature differences since the thermal expansion behavior of each honeycomb cell wall is not uniform. Furthermore, said walls of double-thickness lead to over-weight, each hexagonal cell being 33% heavier than what it would be if all hexagonal cell walls are of single-thickness. Repeating the fact that sandwich-structures comprising skins and a honeycomb core are widely used in applications where high stiffness and lightweight material are required, such over-weight can be of significant drawbacks, in particular in applications such as motor racing vehicles, boats, helicopter, train, aircrafts and spacecrafts.

Besides said traditional method of producing traditional composite honeycomb, an other method has been developed for producing a quasiisotropic composite honeycomb. Such method (see publication number EP0761421A2) is based on stacking prismatic shape bodies of hexagonal cross-section wherein composite sheets are placed on three sides of said prismatic shape bodies, the width of said sheets being equal to the width of the sides. The bodies are then stacked on each other so that between parallel surfaces of adjacent body only one sheet is positioned. The ends of adjacent sheets are then connected together. Quite obviously, since the ends of adjacent sheets are bonded together, the reliability of such a composite honeycomb is lower than in the case that sides of adjacent sheets are bonded together. Indeed, since the stress and strain are transmitted from one honeycomb cell to the other through a particular point, not through a surface, the adjacent sheets are likely to be disconnected. Moreover, such composite honeycomb does not provide continuities of fiber-reinforced material between cell walls. Therefore, the stress and strain cannot be transmitted from one cell wall to the other through fiber-reinforced material. Adjacent sheets forming adjacent cell walls are here again likely to be disconnected when stress and strain are applied to the composite honeycomb. DE 19532850 C1 discloses the features of the preamble of claims 1 and 10 respectively.

Therefore, there is a need for a composite honeycomb and a method of producing a composite honeycomb fulfilling, respectively avoiding, the above-mentioned requirements and drawbacks. The aim of the present invention is thus to provide a solution to these problems.

### Summary of the invention

To this end, in line with the invention, a composite honeycomb according to claim 1 is proposed. Other possible configurations of the invention are defined in claims 2 to 9.

The present invention proposes also a method according to claim 10. Other important features of the method are defined in claims 11 to 18.

The invention thus configured provides a composite honeycomb comprising a plurality of contiguous cells each of substantially hexagonal cross-section wherein each wall of said cells are substantially of the same thickness. By considering that material properties of each cell wall is uniform and by neglecting the non-uniformity in mechanical properties due to the particular geometry of each cell, the uniformity in walls thickness makes the composite honeycomb isotropic, meaning mechanical properties uniform in all directions in the plane of the honeycomb, meaning in the plane perpendicular to the thickness direction of the honeycomb. Moreover and in the case that the honeycomb would be subjected to temperature differences, said uniformity in walls thickness makes the thermal expansion behavior of each honeycomb cell walls uniform so that warping of the honeycomb is avoided. Advantageously, the composite honeycomb may comprise a plurality of contiguous cells each of substantially regular hexagonal cross-section.

Moreover, each cell comprises a lower part and an upper part, the lower, respectively upper, part comprising three lower, respectively upper, cell walls, wherein each lower, respectively upper, part comprises fiber-reinforced material including a plurality of structural fibers arranged to provide a continuity of fiber-reinforced material between the horizontal cell wall and the two inclined cell walls of the lower, respectively upper, part, so that stress and strain applied to the composite honeycomb can be transmitted from the horizontal cell walls to respective inclined cell walls. Since each cell comprises the above-mentioned continuity of fiber-reinforced material between horizontal cell walls and respective inclined cell walls, two continuities of fiber-reinforced material may be provided in each corner of cells of the honeycomb, object of the invention. The composite honeycomb is reliable and provides improved mechanical properties, in particular increase of stress and strain resistance, relative to traditional above-mentioned quasi-isotropic honeycomb which does not provide said continuity of fiber-reinforced material.

Advantageously, each lower part may comprise at least one U-shaped ply comprising a horizontal side and two inclined sides, said U-shaped ply comprising said fiber-reinforced material including a plurality of structural fibers arranged to provide a continuity of fiber-reinforced material between said lower horizontal cell wall and said two lower inclined cell walls of said lower part. Similarly, each upper part may comprise at least one inverted U-shaped ply comprising a horizontal side and two inclined sides, said inverted U-shaped ply comprising said fiber-reinforced material including a plurality of structural fibers arranged to provide a continuity of fiber-reinforced material between said upper horizontal cell wall and said two upper inclined cell walls of said upper part. Therefore, the cell walls of the composite honeycomb may comprise each a portion of U-shaped ply and a portion of an inverted U-shaped ply. Each cell wall of the composite honeycomb is therefore at least of double thickness: Nevertheless, the composite honeycomb objet of the invention is 33% lighter than a honeycomb produced with the help of the above mentioned traditional method. Indeed, in order to produce with the help of the traditional method a composite honeycomb wherein the cell walls comprise each at least two plies, corrugated sheets comprising each two plies would be stacked upon each other. Such traditional method therefore directly implies that two walls of each hexagonal cell are made of parts of two corrugated sheets brought into contact while the other four walls are made of a part of one corrugated sheet. Therefore, said two walls are of double-thickness and comprise four plies while said other four walls are of single-thickness and comprise two plies. A lightweight honeycomb can be of significant advantages in applications such as motor racing vehicles, racing motorcycle, boats, helicopter, train, aircrafts and spacecrafts.

The U-shaped elements and the inverted U-shaped elements comprise each fiber-reinforced material comprising a plurality of structural fibers. Advantageously, the structural fibers of the U-shaped elements, respectively of the inverted U-shaped elements, may be comprised in at least one fiber-reinforced U-shaped ply, respectively in at least one fiber-reinforced inverted U-shaped ply. The structural fibers are intended to bear stress and strain applied to the composite honeycomb. Advantageously, the structural fibers are arranged to provide a continuity of fiber-reinforced material between the horizontal side and the two inclined sides of the U-shaped plies, respectively of the inverted U-shaped plies so that stress and strain applied to the composite honeycomb can be transmitted from said horizontal side to said inclined sides.

Advantageously, the structural fibers may be arranged to lie essentially in a unidirectional orientation for bearing stress and strain in said orientation. Advantageously, the orientation of the structural fibers of the U-shaped ply may differ from the orientation of the structural fibers of the inverted U-shaped ply so that stress and strain applied to the composite honeycomb in different orientations can be borne. Furthermore, the orientation of the structural fibers of the U-shaped ply may be essentially perpendicular to the orientation of the structural fibers of the inverted U-shaped ply.

Advantageously, the lower part, respectively the upper part, may comprise each at least two fiber-reinforced U-shaped plies, respectively at least two fiber-reinforced inverted U-shaped plies, namely a first ply and a second ply, comprising the structural fibers. In such a case, the structural fibers may be arranged so that the orientation of the structural fibers of the first ply differs from the orientation of the structural fibers of the second ply.

Moreover, the structural fibers may be chosen and arranged so that the thickness of the U-shaped ply, respectively of the inverted U-shaped ply, is comprised between 15 and 100 µm. Advantageously, the diameter of the structural fibers may be comprised between 5 and 11 µm. Moreover, the relative weight of the U-shaped ply, respectively of the inverted U-shaped ply, may be as low as 15 g/m². Lightweight plies directly leads to a lightweight composite honeycomb, which can be, as mentioned above, of significant advantages.

Advantageously, the U-shaped elements, respectively the inverted U-shaped elements, may comprise each at least two fiber-reinforced U-shaped plies, respectively at least two fiber-reinforced inverted U-shaped plies, namely a first ply and a second ply, comprising the structural fibers. In such a case, the structural fibers may be arranged so that the orientation of the structural fibers of the first ply differs from the orientation of the structural fibers of the second ply.

Furthermore, for producing a corrugated sheet, the inclined sides of U-shaped elements are brought into contact and bonded with inclined sides of inverted U-shaped elements. The bonding between said elements is reliable. Said elements are not likely to be disconnected since the stress and strain applied to a corrugated sheet are transmitted from one element to the other through sides of element, not through an end. Similarly, for obtaining a composite honeycomb, the horizontal sides of adjacent corrugated sheet are brought into contact and bonded together. The bonding between said corrugated sheets is reliable. Said corrugated sheets are not likely to be disconnected since the stress and strain applied to the honeycomb are transmitted from one cell to the other through sides of adjacent corrugated sheet, not through an end.

Moreover, the method, object of the invention, can be operated in a continuous and high-speed manner. Producing a composite honeycomb is therefore less costly, less time consuming and less laborious than known method.

Further objects, features and advantages of the invention will become apparent to a person skilled in the art upon reading the specification and appended figures.

### Brief description of the drawings

The invention will be better understood with the aid of the description of embodiments given by way of example and illustrated by the figures, in which:
- Figure 1A depicts a schematic representation in cross-section of a known traditional method of producing a traditional composite honeycomb;
- Figure 1B is a detailed view according to A of the composite honeycomb of Figure 1A;
- Figure 2 depicts a schematic representation in cross-section of a composite honeycomb, in accordance with the invention;
- Figure 3A, respectively Figure 3B, depicts a schematic representation in cross-section of a U-shaped ply, respectively of an inverted U-shaped ply, comprised in the lower part, respectively in the upper part, of each cell of a composite honeycomb, in accordance with the invention;
- Figure 4A depicts a schematic representation in cross-section of a method, in a first embodiment, of producing a composite honeycomb object of the invention;
- Figure 4B is a detailed view according to B of the composite honeycomb of Figure 4A;
- Figure 5A depicts a schematic representation in cross-section of a method, in a second embodiment, of producing a composite honeycomb object of the invention;
- Figure 5B is a detailed view according to C of the composite honeycomb of Figure 5A;
- Figure 6 depicts a schematic representation in cross-section of a method of producing corrugated sheets;
- Figure 7 depicts a schematic representation in cross-section of a method of forming U-shaped elements and inverted U-shaped elements;
- Figure 8 depicts a schematic representation in perspective of a fiber-reinforced prepreg ply;
- Figure 9 depicts a schematic representation in perspective of a fiber-reinforced U-shaped ply;
- Figure 10 depicts a schematic representation in cross-section of a composite honeycomb produced with the help of the method object of the invention.

### Detailed description of the invention

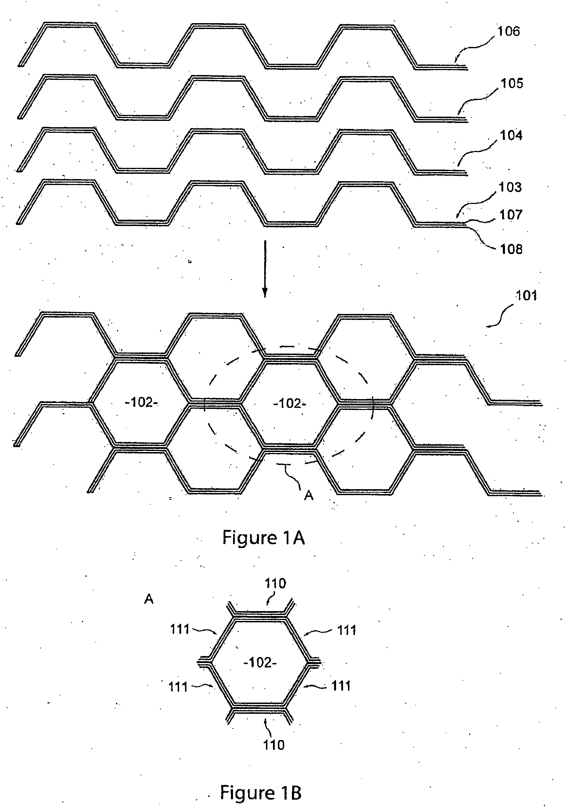

The present invention will now be described more fully hereinafter with reference to the appended Figures 1 to 10.

Figure 1A depicts a schematic representation in cross-section of a known traditional method of producing a composite honeycomb 101 formed of a plurality of regular hexagonal cells 102. Said traditional method is commonly referred to as a corrugation process and is based on the assembly of corrugated composite sheets 103,104,105,106, said sheets being corrugated in such a manner that they define the outline of half of adjacent regular hexagonal honeycomb cells 102. In Figure 1A, the corrugated composite sheets 103,104,105,106 and the honeycomb 101 are shown in cross-section. The corrugated composite sheets 103,104,105,106 are traditionally obtained by passing composite sheets through mated corrugating rollers. Alternatively, corrugated composite sheets can be obtained by pressing composite sheets in a press comprising a pair of mating dies. Nevertheless, said corrugating rollers and said press does not permit to obtain precisely said outline of half of adjacent regular hexagonal honeycomb cells due to the friction between the composite sheet and the rollers or between the composite sheet and the dies. Moreover, because of said friction and because of the low elasticity properties of composite material, composite sheets are likely to be torn when passing through mated corrugating rollers or when being pressed between mating dies. Once corrugated, the composite sheets are stacked upon each other, aligned and bonded to form a composite honeycomb 101. Traditionally, the corrugated sheets 103,104,105,106 comprise each a plurality of plies. In Figure 1A, each corrugated sheet 103,104,105,106 comprises two plies 107', 108'. The honeycomb 101 produced by the above-mentioned traditional method is anisotropic since the walls of each honeycomb cell 102 are not of the same thickness. Indeed, in Figure 1B, two walls 110 of each hexagonal cell 102 are made of parts of two corrugated sheets brought into contact and therefore made of four plies while the other four walls 111 are made of a part of a single corrugated sheet and therefore made of two plies. Said two walls 110 are therefore of double-thickness while said other four walls 111 are of single-thickness. Such non-uniformity in walls thickness makes the honeycomb anisotropic, in particular in mechanical properties, in deformability and in expansion, as well as over-weighted, the honeycomb being 33% heavier than what it would be if all hexagonal cell walls are of single-thickness.

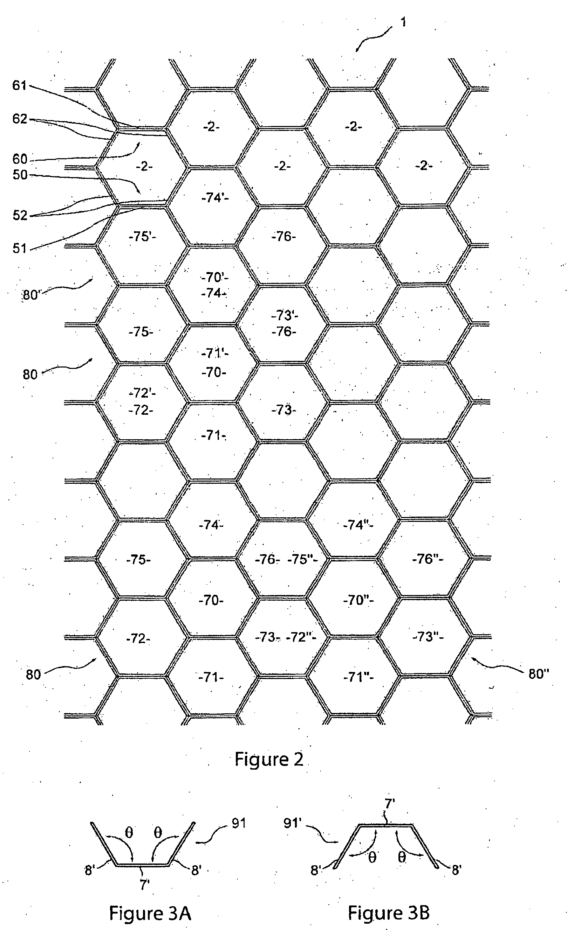

Figure 2 depicts a schematic representation in cross-section of a composite honeycomb 1, in accordance with the invention. The composite honeycomb 1 comprises a plurality of contiguous cells 2 each of substantially hexagonal cross-section. Each cell 2 comprises a lower part 50 and an upper part 60, said lower part 50 comprising three lower cell walls, namely a lower horizontal cell wall 51 and two lower inclined cell walls 52, and said upper part 60 comprising three upper cell walls, namely an upper horizontal cell wall 61 and two upper inclined cell walls 62. Each of said cell walls 51,52,61,62 are substantially of the same thickness. By considering that material properties of each cell wall is uniform and by neglecting the non-uniformity in mechanical properties due to the particular geometry of each cell, the uniformity in walls thickness makes the composite honeycomb isotropic, meaning mechanical properties uniform in all directions in the plane of the honeycomb, meaning in the plane perpendicular to the thickness direction of the honeycomb. In the case that the composite honeycomb would be subjected to temperature differences, the thermal expansion behavior of each honeycomb cell walls is uniform so that warping of the honeycomb is avoided. Moreover, each lower part 50 of each cell 2 comprises fiber-reinforced material including a plurality of structural fibers arranged to provide a continuity of fiber-reinforced material between the lower horizontal cell wall 51 and the two lower inclined cell walls 52 of the lower part 50. Similarly, each upper part 60 comprises fiber-reinforced material including a plurality of structural fibers arranged to provide a continuity of fiber-reinforced material between the upper horizontal cell wall 61 and the two upper inclined cell walls 62 of the upper part 60. Considering the above-mentioned continuities of fiber-reinforced material, stress and strain applied to the composite honeycomb 1 can be transmitted from the horizontal cell walls 51,61 to respective inclined cell walls 52,62. Since each cell 2 comprises the above-mentioned continuity of fiber-reinforced material between horizontal cell walls 51,61 and respective inclined cell walls 52,62, two continuities of fiber-reinforced material may be provided in each corner of cells of the honeycomb, object of the invention. The properties related to the continuity of fiber-reinforced material provide a reliable composite honeycomb with improved mechanical properties; in particular increase of stress and strain resistance.

Advantageously, in Figure 2 the cells 2 of the composite honeycomb 1 may be each of substantially regular hexagonal cross-section, the horizontal cell wall 51,61 and the inclined cell walls 52,62 being substantially of same dimensions and the inclined cell walls 52,62 being inclined at substantially 120° relative to the horizontal cell wall 51,61.

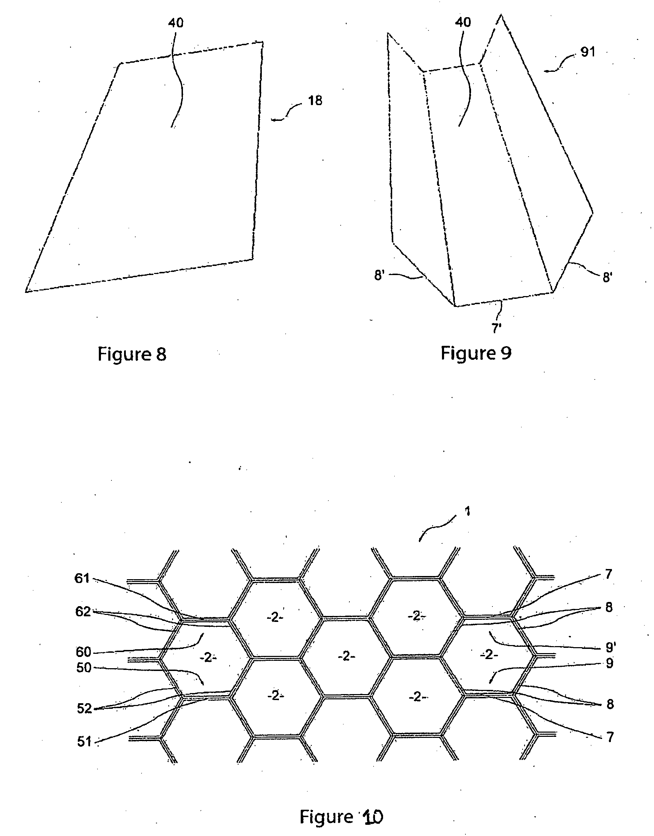

Advantageously, each lower part 50 may comprise at least one U-shaped ply 91 as shown in Figure 3A comprising a horizontal side 7' and two inclined sides 8', the U-shaped ply 91 comprising the fiber-reinforced material including a plurality of structural fibers arranged to provide a continuity of fiber-reinforced material between the lower horizontal cell wall 51 and the two upper inclined cell walls 52 of the lower part 50. For example, Figure 9 depicts a schematic representation of a fiber-reinforced U-shaped ply 91. In Figure 9, the U-shaped ply 91 comprises structural fibers 40 arranged to lie essentially in a unidirectional orientation of about 45° relative to the thickness direction of the composite honeycomb 1. In Figure 9, the continuity of structural fibers 40 between the horizontal side 7' and the two inclined sides 8' of the U-shaped ply 91 is clearly evidenced. Stress and strain can therefore be transmitted from the horizontal side 7' to the inclined sides 8'. Similarly, each upper part 60 may comprise at least one inverted U-shaped ply 91' as shown in Figure 3B comprising the fiber-reinforced material including a plurality of structural fibers 40 arranged to provide a continuity of fiber-reinforced material between the upper horizontal cell wall 61 and the two upper inclined cell walls 62 of the upper part 60. Therefore, the cell walls of the composite honeycomb 1 may comprise each a portion of U-shaped ply 91 and a portion of an inverted U-shaped ply 91'. Each cell wall of the composite honeycomb 1 is therefore at least of double thickness. Nevertheless, the composite honeycomb 1 is 33% lighter than a honeycomb produced with the help of the above mentioned traditional method. Indeed, in order to produce with the help of the traditional method a composite honeycomb wherein the cell walls comprise each at least two plies, corrugated sheets comprising each two plies would be stacked upon each other. Such traditional method therefore directly implies that two walls of each hexagonal cell are made of parts of two corrugated sheets brought into contact while the other four walls are made of a part of one corrugated sheet. Therefore, said two walls are of double-thickness and comprise four plies while said other four walls are of single-thickness and comprise two plies. A lightweight honeycomb can be of significant advantages in applications such as motor racing vehicles, racing motorcycle, boats, helicopter, train, aircrafts and spacecrafts. Advantageously, the inverted U-shaped ply 91' is substantially symmetrical in shape to the U-shaped ply 91.

Advantageously, the structural fibers 40 may be arranged to lie essentially in a unidirectional orientation for bearing stress and strain in that orientation. More advantageously, the orientation of the structural fibers 40 of the U-shaped ply 91 may differ from the orientation of the structural fibers 40 of the inverted U-shaped ply 91' so that stress and strain applied to the composite honeycomb in different orientations can be borne. Furthermore, the structural fibers 40 may be arranged so that the orientation of the structural fibers of the U-shaped ply 91 may be substantially perpendicular to the orientation of the structural fibers 40 of the inverted U-shaped ply 91'. Advantageously, the orientation α of the structural fibers 40 of the U-shaped ply 91 and/or the orientation β of the structural fibers 40 of the inverted U-shaped ply 91' may be chosen among substantially 0°, ±30° ±45° or 90° relative to the thickness direction of the composite honeycomb 1. For example, one can have the following combinations of structural fibers orientations [α, β]= [+30,-30°] or [+45,-45°] or [0°, +30°] or [0°, -30°] or [0°,+45°] or [0°,-45°] or [0°,90°] or [-30°,+45°] or [+30°,-45°]. Others combinations can be found for example by defining in the preceding examples the β values as the α ones and vice versa. Advantageously, the structural fibers 40 may be chosen among carbon, glass, aramid, ceramic, quartz, thermoplastic polyethylene (UHMWPE) and polybenzoxazole (PBO). Advantageously, the structural fibers 40 are chosen so that the thickness of each U-shaped plies 91 and of each inverted U-shaped plies 91' are comprised between 15 and 100 µm. Advantageously, the diameter of the structural fibers 40 may be comprised between 5 and 11 µm. U-shaped plies 91 and inverted U-shaped plies 91' comprising structural fibers 40 of such thickness are considered and defined as thin plies. The relative weight each U-shaped ply 91 and of each inverted U-shaped plies 91' may be as low as 15 g/m². Lightweight plies directly leads to a lightweight composite honeycomb, which can be, as mentioned above, of significant advantages.

Advantageously, each lower part 50 and each upper part 60 may comprise a plurality of fiber-reinforced plies. For example, the lower part 50, respectively the upper part 60, may comprise each at least two fiber-reinforced U-shaped plies, respectively at least two fiber-reinforced inverted U-shaped plies, namely a first ply and a second ply. Advantageously, the two fiber-reinforced U-shaped plies, respectively the two fiber-reinforced inverted U-shaped plies, may be directly superimposed. The first plies and the second plies comprise the structural fibers 40 of the lower part 50 and of the upper part 60. Advantageously, the structural fibers 40 are arranged so that the orientation of the structural fibers 40 of the first ply differs from the orientation of the structural fibers 40 of the second ply. In particular, the orientation of the structural fibers 40 of the first ply can be substantially perpendicular to the orientation of the structural fibers 40 of the second ply. Moreover, the orientation of the structural fibers 40 of the first ply and/or the orientation of the structural fibers 40 of the second ply can be chosen among substantially 0°, ±30° ±45° or 90° relative to the thickness direction of the composite honeycomb 1. For example and by defining by γ the orientation of the structural fibers 40 of the first ply of the lower part 50, by δ the one of the second ply of the lower part 50, by ε the orientation of the one of the first ply of the upper part 60 and by ζ the one of the second ply of the upper part 60, one can have the following combination of structural fibers orientations: [γ,δ,ε,ζ]= [+45°,-45°,-45°,+45°] or [+45°,-45°,+45°,-45°] or [-45°,+45°,-45°,+45°] or [0°,+90°,-90°,0°] or [+90°,0°,0°,-90°] or [0°,+30°,-30°,0°] or [0°,-30°,+30°,0°] or [0°,+45°,-45°,0°] or [0°,+45°,-45°,0°] or [+45°,-30°,+30°,-45°] or [-45°,+30°,-30°,+45°] or [+45°,-90°,+90°,-45°] or [-45°,+90°,-90°,+45°] or [+30°,-90°,+90°,-30°] or [-30°,+90°,-90°,+30°].

As mentioned above, the composite honeycomb 1 may comprise a plurality of contiguous cells 2 each of substantially regular hexagonal cross-section. In Figure 2, said plurality of contiguous cells 2 comprises advantageously at least one central cell 70 surrounded by six peripheral cells, namely a lower 71, a lower left 72, a lower right 73, an upper 74, an upper left 75 and an upper right 76 peripheral cell, said central cell 70 and said peripheral cells 70,71,72,73,74,75,76 being interconnected and forming together a cell group 80. The cells 70,71,72,73,74,75,76 comprise each a lower and upper parts as defined above and comprising structural fibers providing, as defined above, continuity of fiber-reinforced material between horizontal cell walls and respective inclined cell walls. Therefore, the cells 70,71,72,73,74,75,76 may advantageously be arranged in such a manner that two continuities of fiber-reinforced material is provided in each corner of the central cell 70. In Figure 2, the central cell is connected to the six peripheral cells. The lower 71, respectively upper 74, peripheral cell is connected to the lower left 72 and to the lower right 73, respectively upper left 75 and upper right 76, peripheral cells. The lower left 72, respectively lower right 73, peripheral cell is connected to the upper left 75, respectively upper right 76, peripheral cell. In the cell group 80, one of the two lower inclined cell walls 52 of the central cell 70 comprises one inclined side 8' of the inverted U-shaped ply 91' of the lower left peripheral cell 72 and the other lower inclined cell wall 52 of the central cell 70 comprises one inclined side 8' of the inverted U-shaped ply 91' of the lower right peripheral cell 73, so that stress and strain applied to the composite honeycomb 1 can be transmitted from the lower horizontal cell wall 51 of the central cell 70 to the upper horizontal cell wall 61 of the lower left peripheral cell 72, respectively to the upper horizontal cell wall 61 of the lower right peripheral cell 73, through one of the upper inclined cell walls 62 of the lower left peripheral cell 72, respectively through one of the upper inclined cell walls 62 of the lower right peripheral cell 73. Similarly, one of the two upper inclined cell walls 62 of the central cell 70 comprises one inclined side 8' of the U-shaped ply 91 of the upper left peripheral cell 75 and the other upper inclined cell wall 62 of the central cell 70 comprises one inclined side 8' of the U-shaped ply 91 of the upper right peripheral cell 76, so that stress and strain applied to the composite honeycomb 1 can be transmitted from the upper horizontal cell wall 61 of the central cell 70 to the lower horizontal cell wall 51 of the upper left peripheral cell 75, respectively to the lower horizontal cell wall 51 of the upper right peripheral cell 76, through one of the lower inclined cell walls 52 of the upper left peripheral cell 75, respectively through one of the lower inclined cell walls 52 of the upper right peripheral cell 76. Therefore and in the cell group 80, two continuities of fiber-reinforced material are provided in each corner of the central cell 70 of the honeycomb 1. Moreover, each wall of said central cell comprise a portion of U-shaped ply 91 and a portion of inverted U-shaped ply 91' so that each wall comprises two plies.

Advantageously, the composite honeycomb 1 comprises a plurality of cell groups 80,80',80". Advantageously, the composite honeycomb 1 comprises a plurality of cells groups uniformly distributed along a vertical axis. For instance, Figure 2 shows a cell group 80 and a cell group 80' distributed along said vertical axis. In this case, the upper peripheral cell 74 of the cell group 80 corresponds to the central cell 70' of the contiguous cell group 80'. Similarly, the lower peripheral cell 71 of the cell group 80' corresponds to the central cell 70 of the contiguous cell group 80. More advantageously, the composite honeycomb 1 comprises a plurality of cell group uniformly distributed along a horizontal axis. For instance, Figure 2 shows a cell group 80 and a cell group 80" distributed along said horizontal axis. In this case, the lower right 73, respectively the upper right 76, peripheral cell of the cell group 80 corresponds to the lower left 72", respectively upper left 75" of the contiguous cell group 80".

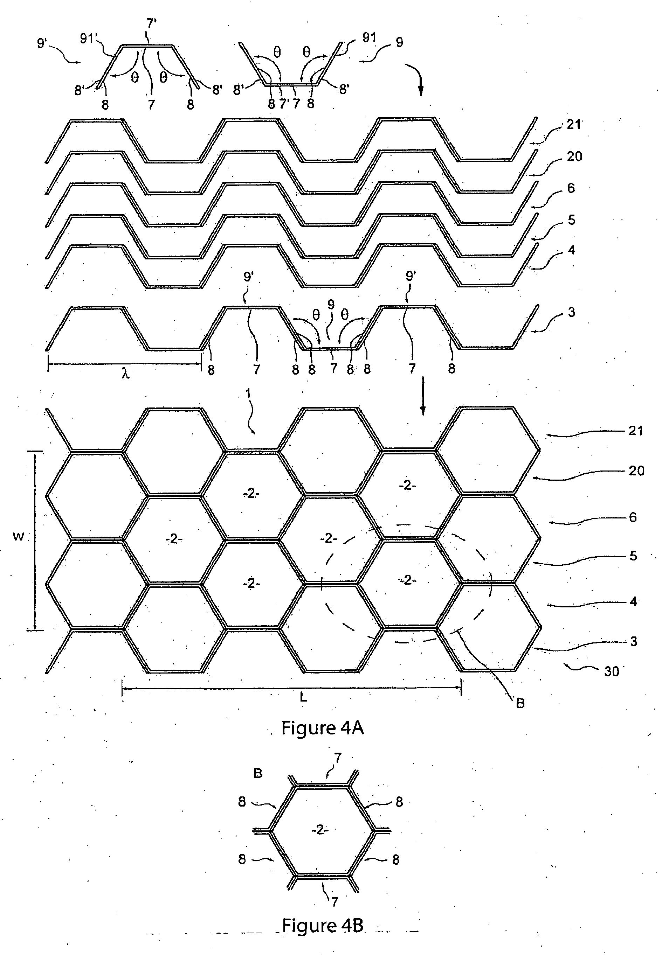

By way of example, a method of producing the composite honeycomb 1 object of the invention is described hereinafter with reference to the appended Figures 4 to 9.

Figure 4A depicts a schematic representation of a method of producing a composite honeycomb 1, in a first embodiment. The produced composite honeycomb 1 is formed of a plurality of honeycomb cells 2 each of substantially hexagonal cross-section. Moreover, each wall of said honeycomb cells are of substantially the same thickness, see Figure 4B. Advantageously, the composite honeycomb 1 is formed of a plurality of honeycomb cells 2 each of substantially regular hexagonal cross-section. The first step of the method, object of the invention, consists essentially of producing at least four corrugated sheets 3,4,5,6 by interconnecting a plurality of fiber-reinforced substantially U-shaped elements 9 with fiber-reinforced substantially inverted U-shaped elements 9'. In Figure 4A, six corrugated sheets are produced, namely a first 3, a second 4, a third 5 and a fourth 6 corrugated sheet as well as two subsequent corrugated sheets 20,21. The U-shaped elements 9, the inverted U-shaped elements 9', the corrugated composite sheets 3,4,5,6,20,21 and the honeycomb 1 are shown in Figure 4A in cross-section. The U-shaped elements 9 comprise each a horizontal side 7 and two inclined sides 8. Advantageously, the inverted U-shaped elements 9' can be substantially symmetrical in shape to the U-shaped elements 9, the horizontal side 7 and the inclined sides 8 can be substantially of same dimensions and the inclined sides 8 can be inclined at substantially 120° relative to the horizontal side 7 so that the produced composite honeycomb 1 is formed of a plurality of cells 2 each of substantially regular hexagonal cross-section. The plurality of U-shaped elements 9 are interconnected with inverted U-shaped elements 9' so that each inclined side 8 of each U-shaped element 9 is brought into contact and bonded with one inclined side 8 of one of the inverted U-shaped elements 9'. By this way, the U-shaped elements 9 and the inverted U-shaped elements 9' are bonded together so that each corrugated sheet 3,4,5,6,20,21 is shaped in cross-section in a substantially periodic trapezoidal waveform defining in cross-section the outline of half of adjacent hexagonal honeycomb cells 2 of the composite honeycomb 1. Advantageously, each corrugated sheet 3,4,5,6,20,21 can be shaped in cross-section in a substantially periodic regular trapezoidal waveform defining in cross-section the outline of half of adjacent regular hexagonal honeycomb cells 2 of the composite honeycomb 1 when the horizontal side 7 and the inclined sides 8 of the U-shaped elements 9 are substantially of same dimensions, when the inclined sides 8 are inclined at substantially 120° relative to the horizontal side 7 and when the inverted U-shaped elements 9' are substantially symmetrical in shape to the U-shaped elements 9. Advantageously and since the inclined side 8 of U-shaped elements 9 are brought into contact and bonded with inclined sides 8 of inverted U-shaped elements 9', the bonding between the U-shaped elements and the inverted U-shaped elements is reliable. The elements are not likely to be disconnected since the stress and strain applied to the composite honeycomb 1 and therefore to the corrugated sheets 3,4,5,6,20,21 are transmitted from one element to the other through sides 8 of elements 9,9', not through an end. The number of interconnected U-shaped elements 9 and inverted U-shaped elements 9' depends on the desired length L of the composite honeycomb 1. Moreover and since the inclined side 8 of U-shaped elements 9 are brought into contact and bonded with inclined sides 8 of inverted U-shaped elements 9', each corrugated sheet 3,4,5,6,20,21 comprises inclined sides 8 of double thickness and horizontal side 7 of single thickness. Since horizontal sides 7 of corrugated sheets 3,4,5,6,20,21 are intended to be brought into contact so as to form a corrugated sheets stack 30 (see below), the cell walls of the corrugated sheets stack 30 are all of the same thickness, each being of double thickness.

The U-shaped elements 9 and the inverted U-shaped elements 9' comprise each fiber-reinforced material comprising a plurality of structural fibers 40, said structural fibers 40 being intended to bear stress and strain applied to the composite honeycomb. Advantageously, the U-shaped elements 9, respectively the inverted U-shaped elements 9', may comprise at least one fiber-reinforced U-shaped ply 91, respectively at least one fiber-reinforced inverted U-shaped ply 91', which comprises the structural fibers 40 of the U-shaped elements 9, respectively of the inverted U-shaped elements 9'. For example, Figure 9 depicts a schematic representation in perspective of a fiber-reinforced U-shaped ply 91. The U-shaped plies 91 and the inverted U-shaped ply 91' comprise each a horizontal side 7' and two inclined sides 8'. Advantageously, the plurality of structural fibers 40 may be arranged to provide a continuity of fiber-reinforced material between the horizontal side 7' and the two inclined sides 8' of the U-shaped ply 91, respectively of the inverted U-shaped ply 91', so that stress and strain applied to the composite honeycomb can be transmitted from the horizontal side 7' to the inclined sides 8'. Moreover, the structural fibers 40 may advantageously be arranged to lie essentially in a unidirectional orientation for bearing stress and strain in said orientation.

Advantageously, each U-shaped element 9 and each inverted U-shaped element 9' may comprise a plurality of fiber-reinforced plies. For example, said U-shaped elements 9, respectively said inverted U-shaped elements 9', can comprise each at least two fiber-reinforced U-shaped plies, respectively at least two fiber-reinforced inverted U-shaped plies, namely a first ply and a second ply. Advantageously, the two fiber-reinforced U-shaped plies, respectively the two fiber-reinforced inverted U-shaped plies, may be directly superimposed. The first plies and the second plies comprise the structural fibers 40 of the U-shaped elements 9 and of the inverted U-shaped elements 9'. Advantageously, the structural fibers 40 are arranged so that the orientation of the structural fibers 40 of the first ply differs from the orientation of the structural fibers 40 of the second ply.

Subsequently of producing the corrugated sheets 3,4,5,6,20,21, the method object of the invention comprises the step of stacking the first 3, the second 4, the third 5 and the fourth 6 corrugated sheets upon each other so as to form a corrugated sheets stack 30 and so as to obtain a plurality of substantially hexagonal honeycomb cells 2 by bringing into contact horizontal sides 7 of adjacent corrugated sheets 3,4,5,6. In Figure 4A, the second corrugated sheet 4 is directly staked on the first one 3, the third one 5 is directly staked on the second one 4, and the fourth one 6 is directly stacked on the third one 5. Moreover and in this particular embodiment of the invention, horizontal sides 7 of U-shaped elements 9 of the corrugated sheets 3,4,5,6 are brought into contact with horizontal sides 7 of U-shaped elements 9 of adjacent corrugated sheet 3,4,5,6. Consequently, the horizontal sides 7 of inverted U-shaped elements 9' of the corrugated sheets 3,4,5,6 are brought into contact with horizontal sides 7 of inverted U-shaped elements 9' of adjacent corrugated sheet 3,4,5,6. Actually, the adjacent corrugated sheets 3,4,5,6 are turned over from each other. In Figure 4A, the second corrugated sheet 4 and the fourth one 6 are turned over from the first corrugated sheet 3 or from the third one 5.

Subsequently and advantageously, the method object of the invention comprise the step of stacking subsequent corrugated sheets 20,21 upon the corrugated sheets stack 30 in a similar way as the first 3, second 4, third 5 and fourth 6 corrugated sheets has been stacked upon each other. The number of subsequent corrugated sheets is chosen in function of the desired width w of the composite honeycomb 1. In Figure 4A, two subsequent corrugated sheets 20,21 are stacked upon the corrugated sheets stack 30.

The method object of the invention comprises the step of bonding the horizontal sides 7 of corrugated sheets 3,4,5,6,20,21 brought into contact so as to obtain the composite honeycomb 1. The horizontal sides 7 of corrugated sheets 3,4,5,6,20,21 brought into contact can be bonded either concomitantly as a whole or sequentially in pairs as one of the corrugated sheets 3,4,5,6,20,21 is stacked upon an other one. In order to bond the horizontal sides 7 of corrugated sheets 3,4,5,6,20,21 brought into contact concomitantly as a whole, the corrugated sheets stack 30 is heat-hardened. Alternatively, the horizontal sides 7 of corrugated sheets 3,4,5,6,20,21 brought into contact are bonded sequentially in pairs as one of the corrugated sheets 3,4,5,6,20,21 is stacked upon an other one by gluing the horizontal sides 7 brought into contact. Since horizontal sides of adjacent corrugated sheets are brought into contact, the bonding between adjacent corrugated sheets is reliable. Adjacent corrugated sheets are not likely to be disconnected since the stress and strain applied to the honeycomb are transmitted from one honeycomb cell to the other through sides of adjacent corrugated sheets, not through an end.

Advantageously, the composite honeycomb 1 may be isotropic since it may be formed of a plurality of honeycomb cells 2 each of substantially regular hexagonal cross-section and with all walls of said honeycomb cells of substantially the same thickness, see Figure 4B. By considering that material properties of each cell wall is uniform and by neglecting the non-uniformity in mechanical properties due to the particular geometry of each cell, the uniformity in walls thickness makes the composite honeycomb 1 isotropic, meaning mechanical properties uniform in all directions.

Advantageously, parts of the assembled corrugated sheets 3,4,5,6,20,21 can be cut so as to keep the honeycomb cells 2, which walls are of substantially the same thickness.

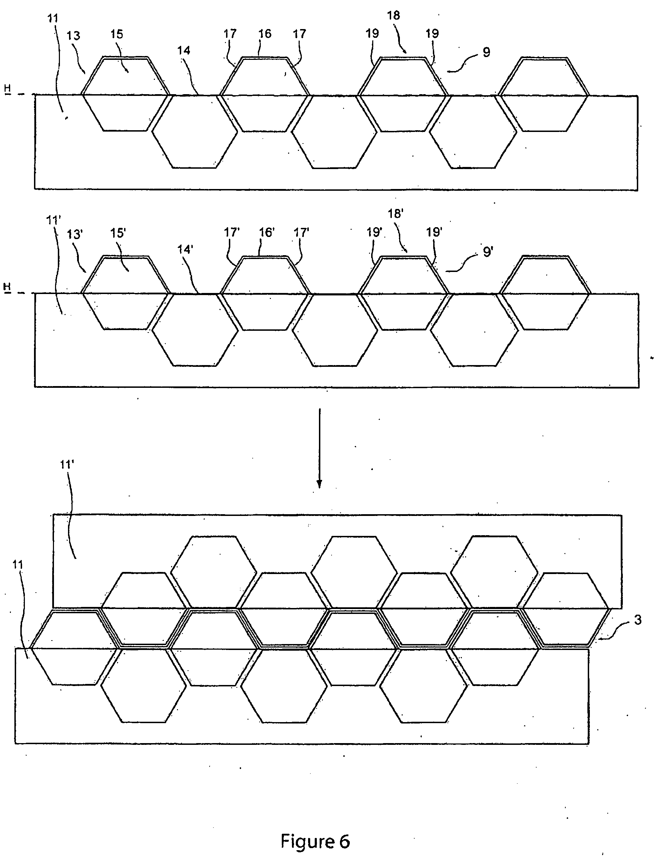

Figure 6 depicts a schematic representation of a method of producing corrugated sheets 3,4,5,6,20,21. The method comprise the step of preparing a pair of mating molds, namely a first mold 11 and a second mold 11', comprising each a molding surface 13,13' provided with flat sides 14,14' arranged in a horizontal plane H and with a plurality of uniformly distributed substantially trapezoid profiles 15,15' projecting with respect to the horizontal plane H. The trapezoid profiles 15,15' comprise each a horizontal base 16,16' projecting with respect to the horizontal plane H and inclined legs 17,17' linking the horizontal base 16 to adjacent flat sides 14,14'. In Figure 6, the molding surface 13 of the first mold 11 is substantially identical to the molding surface 13' of the second mold 11'. Moreover, the trapezoid profiles 15,15' are substantially isosceles, said inclined legs 17,17' being inclined at substantially 120° relative to the horizontal base 16,16' and being of substantially same dimensions as the horizontal bases 16,16'. Moreover, the horizontal bases 16,16' are substantially of same dimensions as the flat sides 14,14'. Isosceles trapezoid profiles 15,15' and horizontal bases 16,16' substantially of same dimensions as the flat sides 14,14' can advantageously lead to the production of a composite honeycomb 1 formed of a plurality of cells 2 each of substantially regular hexagonal cross-section since each corrugated sheet 3,4,5,6,20,21 is shaped in cross-section in a substantially periodic regular trapezoidal waveform defining in cross-section the outline of half of adjacent regular hexagonal honeycomb cells 2 of the composite honeycomb 1.

The method provide the step of forming the U-shaped elements 9 by covering each trapezoid profile 15 of the first mold 11 with a portion of a first fiber-reinforced prepreg ply 18 comprising the structural fibers 40 of the U-shaped elements 9, wherein each portion of first fiber-reinforced prepreg ply 18 covers the horizontal base 16 and the inclined legs 17 of one trapezoid profile 15 of the first mold 11. Similarly, the method provide the step of forming the inverted U-shaped elements 9' by covering each trapezoid profile 15' of the second mold 11' with a portion of a second fiber-reinforced prepreg ply 18' comprising the structural fibers 40 of the inverted U-shaped elements 9', wherein each portion of second fiber-reinforced prepreg ply 18' covers the horizontal base 16' and the inclined legs 17' of one trapezoid profile 15' of the second mold 11'. Once heat-hardened, the portions of first fiber-reinforced prepreg ply 18 and the portions of second fiber-reinforced prepreg ply 18' will become the U-shaped ply 91 and the inverted U-shaped ply 91' respectively. For example, Figure 8 depicts a schematic representation of a first fiber-reinforced prepreg ply 18. The first fiber-reinforced prepreg ply 18 and the second fiber-reinforced prepreg ply 18' comprise each at least one fiber-reinforced ply comprising the structural fibers 40. Advantageously, the first fiber-reinforced prepreg ply 18 and the second fiber-reinforced prepreg ply 18' can comprise a plurality of plies comprising the structural fibers 40.

Subsequently, the method comprise the step of interconnecting a plurality of U-shaped elements 9 with inverted U-shaped elements 9' by assembling the pair of mating molds so that sides 19 of the portions of first fiber-reinforced prepreg ply 18 covering the inclined legs 17 of the trapezoid profiles 15 of the first mold 11 are brought into contact with corresponding sides 19' of the portions of second fiber-reinforced prepreg ply 18' covering the inclined legs 17' of the trapezoid profiles 15' of the second mold 11'. Preferably, the pair of mating mold is assembled by turning over from each other the first mold 11 and the second mold 11'.

Subsequently, the method comprise the step of heat-hardening said portions of first and second fiber-reinforced prepreg plies 18,18' so as to bond said sides 19 of portions of first fiber-reinforced prepreg ply 18 with corresponding sides 19' of portions of second fiber-reinforced prepreg ply 18' and so as to obtain the first corrugated sheet 3. The interconnected U-shaped elements 9 and inverted U-shaped elements 9' are therefore bonded. Such bonding is reliable since the stress and strain applied to the honeycomb and therefore to the corrugated sheet are transmitted from one ply to the other through sides of elements 9,9', not through ends.

Subsequently, the method comprise the step of repeating the previous steps so as to obtain the second 4, third 5 and fourth 6 corrugated sheets as well as eventually the subsequent corrugated sheets 20,21.

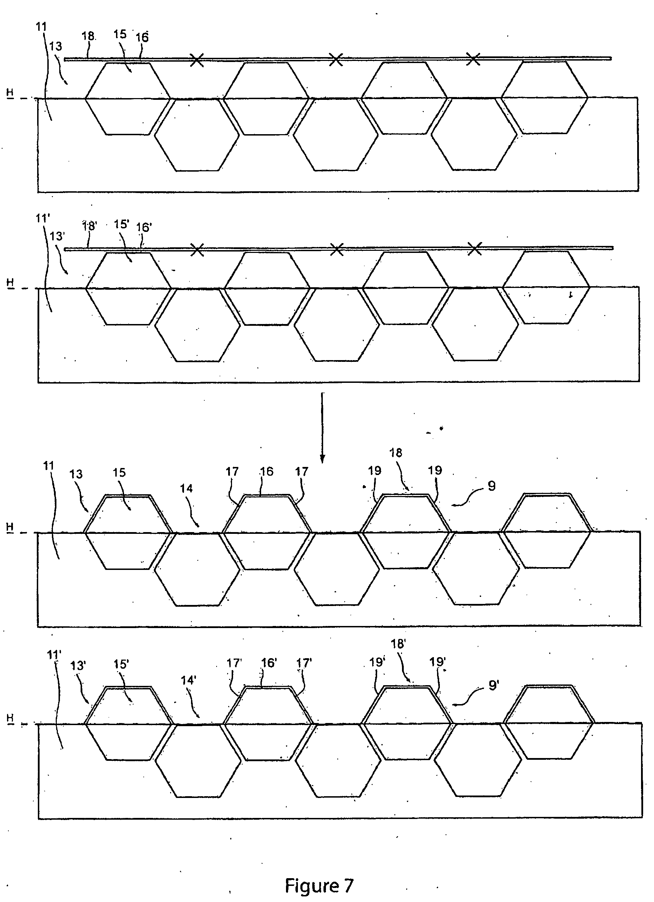

Figure 7 depicts a schematic representation of a method of forming U-shaped elements 9 and inverted U-shaped elements 9' by covering a molding surface with a fiber-reinforced prepreg ply, in accordance with the invention. In particular, the following method allows to cover each isosceles trapezoid profile 15,15' of the first mold 11, respectively second mold 11', with a portion of first fiber-reinforced prepreg ply 18, respectively second fiber-reinforced prepreg ply 18, effectively. The method comprises the step of positioning a first fiber-reinforced prepreg ply 18, respectively second fiber-reinforced prepreg ply 18', upon the molding surface 13,13' of the first mold 11, respectively second mold 11'. Advantageously, the first fiber-reinforced prepreg ply 18, respectively second fiber-reinforced prepreg ply 18', is tightened and maintained above the molding surface 13,13'. Subsequently, the method comprise the step of cutting the first fiber-reinforced prepreg ply 18, respectively second fiber-reinforced prepreg ply 18', so that said portions of first fiber-reinforced prepreg ply 18, respectively second fiber-reinforced prepreg ply 18', are generated. The first fiber-reinforced prepreg ply 18, respectively second fiber-reinforced prepreg ply 18' are cut at every point corresponding to the middle distance between two adjacent isosceles trapezoid profiles 15,15' of the first mold 11, respectively second mold 11'. Because the trapezoid profiles 15,15' are isosceles and because the horizontal bases 16,16' are substantially of same dimensions as the flat sides 14,14', said portions of first fiber-reinforced prepreg ply 18, respectively second fiber-reinforced prepreg ply 18', cover each isosceles trapezoid profile 15,15' of the first mold 11, respectively second mold 11'. Advantageously, the first fiber-reinforced prepreg ply 18, respectively second fiber-reinforced prepreg ply 18', is cut by laser-cutting.

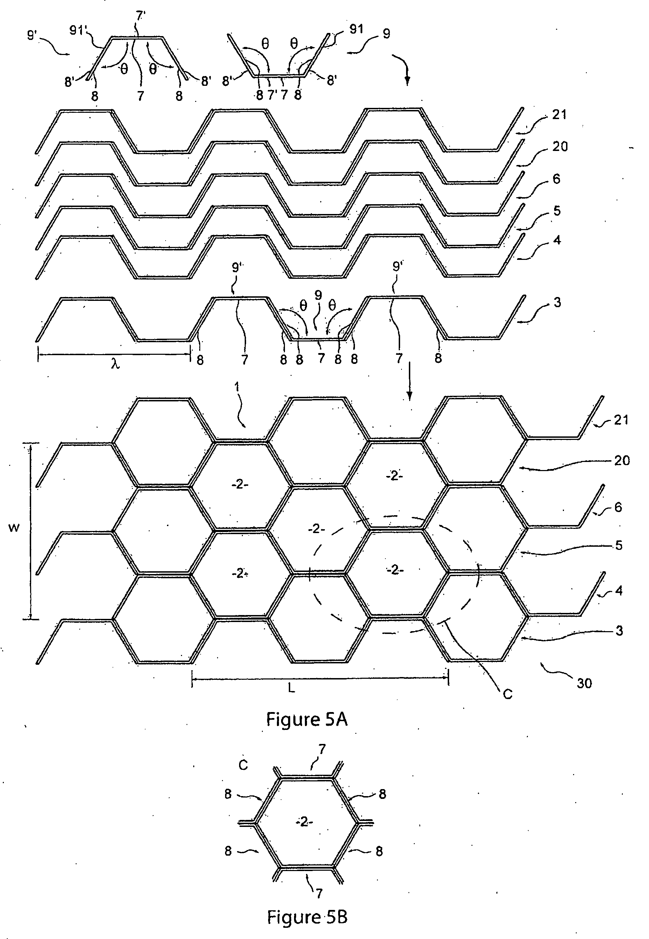

Figure 5A depicts a schematic representation of a method of producing a composite honeycomb 1, in accordance with the invention in a second embodiment. The same steps and elements as in Figure 4A appear in Figure 5A which means that it is not necessary to describe them in detail again. For such steps and elements, one refers to the description of Figure 4A. Similarly, Figure 5B is a detailed view of the composite honeycomb of Figure 5A and the same elements as in Figure 4B appear in Figure 5B which means that it is not necessary to describe them in detail again. In this second embodiment of the invention, horizontal sides 7 of U-shaped elements 9 of the corrugated sheets 3,4,5,6,20,21 are brought into contact with horizontal sides 7 of inverted U-shaped elements 9' of adjacent corrugated sheet 3,4,5,6,20,21. Advantageously, the corrugated sheets 3,4,5,6,20,21 are shaped in a waveform with a determined wavelength λ and the adjacent corrugated sheets 3,4,5,6,20,21 are displaced from each other of substantially one-half of the determined wavelength λ. In Figure 5A, the second corrugated sheet 4, the fourth corrugated sheet 6 and the subsequent corrugated sheet 21 are displaced in a first direction of substantially one-half of the determined wavelength λ, from the first corrugated sheet 3 or from the third corrugated sheet 5 or from the subsequent corrugated sheet 20.

In the above methods of producing corrugated sheets 3,4,5,6,20,21 referring to Figure 6 arid to Figure 7, the first fiber-reinforced prepreg ply 18 and the second fiber-reinforced prepreg ply 18' comprise at least one fiber-reinforced prepreg ply comprising the structural fibers 40. Advantageously, the first fiber-reinforced prepreg ply 18 and the second fiber-reinforced prepreg ply 18' can comprise at least two plies comprising the structural fibers 40. Moreover, the first fiber-reinforced prepreg ply 18 and the second fiber-reinforced prepreg ply 18' can be identical or different, in particular in terms of structural fibers orientation. One of the advantages of the method object of the invention comes from the fact that the pair of mating mold is assembled by turning over from each other the first mold 11 and the second mold 11'. Consequently and by considering that the first and second fiber-reinforced prepreg plies 18,18' are identical, in particular in terms of structural fibers orientation α, each cells wall of the produced honeycomb 1 comprises a portion of the first fiber-reinforced prepreg ply 18 with structural fibers orientation α and a portion of the second fiber-reinforced prepreg ply 18' with structural fibers orientation -α due to the fact that the second fiber-reinforced prepreg plies 18' has been turned over from the first one 18. Producing a composite honeycomb is therefore less costly, less time consuming and less laborious than known method because it is not necessary to produced two different kinds of plies for producing a composite honeycomb 1 wherein each cell wall comprises two plies comprising opposite structural fibers orientation.

Generally speaking and considering the above descriptions of methods of producing a composite honeycomb 1 with reference to the Figures 4 to 9, the first fiber-reinforced prepreg ply 18 in Figures 8 and 7 may be subjected to become a portions of first fiber-reinforced prepreg ply 18 in Figure 6 which may be subjected to become a U-shaped ply 91 in Figure 9 which may be subjected to be comprised in a U-shaped element 9 in Figures 4 and 5.

As an example, Figure 10 depicts a schematic representation in cross-section of a composite honeycomb 1 produced with the help of the method object of the invention. Advantageously, the composite honeycomb 1 comprises a plurality of contiguous cells 2 each of substantially regular hexagonal cross-section. Each cell 2 comprises a lower part 50 and an upper part 60, said lower part 50 comprising three lower cell walls, namely a lower horizontal cell wall 51 and two lower inclined cell walls 52, and said upper part 60 comprising three upper cell walls, namely an upper horizontal cell wall 61 and two upper inclined cell walls 62. Each of said cell walls 51,52,61,62 are substantially of the same thickness. Moreover, each upper part 60 comprises an inverted U-shaped element 9'. Therefore, each upper part 60 may comprise fiber-reinforced material including a plurality of structural fibers 40 arranged to provide a continuity of fiber-reinforced material between the upper horizontal cell wall 61 and the two upper inclined cell walls 62 of the upper part 60. Similarly, each lower part 50 comprises a U-shaped element 9. Therefore, each lower part 50 may comprise fiber-reinforced material including a plurality of structural fibers 40 arranged to provide a continuity of fiber-reinforced material between the lower horizontal cell wall 51 and the two lower inclined cell walls 52 of the lower part 50. Considering the above-mentioned continuities of fiber-reinforced material, stress and strain applied to the isotropic composite honeycomb 1 can be transmitted from the horizontal cell walls 51,61 to respective inclined cell walls 52,62. Since each cell 2 may comprise the above-mentioned continuity of fiber-reinforced material between horizontal cell walls 51,61 and respective inclined cell walls 52,62, two continuities of fiber-reinforced material may be provided in each corner of cells of the honeycomb. The properties related to the continuity of fiber-reinforced material provide a reliable composite honeycomb with improved mechanical properties, in particular increase of stress and strain resistance.

## Claims

1. A composite honeycomb (1) comprising a plurality of contiguous cells (2) each of substantially hexagonal cross-section,
- each cell (2) comprising a lower part (50) and an upper part (60), said lower part (50) comprising three lower cell walls, namely a lower horizontal cell wall (51) and two lower inclined cell walls (52), and said upper part (60) comprising three upper cell walls, namely an upper horizontal cell wall (61) and two upper inclined cell walls (62), wherein
- each of said cell walls (51,52,61,62) are substantially of the same thickness, **characterized**
- **in that** each lower part (50) comprises fiber-reinforced material including a plurality of structural fibers (40) arranged to provide a continuity of fiber-reinforced material between said lower horizontal cell wall (51) and said two lower inclined cell walls (52) of said lower part (50)
- **and in that** each upper part (60) comprises fiber-reinforced material including a plurality of structural fibers (40) arranged to provide a continuity of fiber-reinforced material between said upper horizontal cell wall (61) and said two upper inclined cell walls (62) of said upper part (60),
- **so that** stress and strain applied to said composite honeycomb (1) can be transmitted from said horizontal cell walls (51,61) to respective inclined cell walls (52,62).

2. The composite honeycomb according to the preceding claim, **characterized in that** said cells (2) are each of substantially regular hexagonal cross-section, said horizontal cell wall (51,61) and said inclined cell walls (52,62) being substantially of same dimensions and said inclined cell walls (52,62) being inclined at substantially 120° relative to said horizontal cell wall (51,61).

3. The composite honeycomb according to any one of the preceding claims, **characterized**
- **in that** each lower part (50) comprises at least one U-shaped ply (91) comprising a horizontal side (7') and two inclined sides (8'), said U-shaped ply (91) comprising said fiber-reinforced material including a plurality of structural fibers (40) arranged to provide a continuity of fiber-reinforced material between said lower horizontal cell wall (51) and said two lower inclined cell walls (52) of said lower part (50)
- and **in that** each upper part (60) comprises at least one inverted U-shaped ply (91') comprising a horizontal side (7') and two inclined sides (8'), said inverted U-shaped ply (91') comprising said fiber-reinforced material including a plurality of structural fibers (40) arranged to provide a continuity of fiber-reinforced material between said upper horizontal cell wall (61) and said two upper inclined cell walls (62) of said upper part (60).

4. The composite honeycomb according to any one of the preceding claims, **characterized in that** said structural fibers (40) are arranged to lie essentially in a unidirectional orientation, and are arranged so that the orientation of the structural fibers (40) of said U-shaped ply (91) differs from the orientation of the structural fibers (40) of said inverted U-shaped ply (91').

5. The composite honeycomb according to any one of the preceding claims, **characterized in that** said lower part (50), respectively said upper part (60), comprises each at least two fiber-reinforced U-shaped plies, respectively at least two fiber-reinforced inverted U-shaped plies, namely a first ply and a second ply, comprising said structural fibers (40) and **in that** said structural fibers (40) are arranged so that the orientation of the structural fibers (40) of said first ply differs from the orientation of the structural fibers (40) of said second ply.

6. The composite honeycomb according to any one of claims 3 to 5, **characterized in that** said structural fibers (40) are chosen and arranged so that the thickness of each U-shaped ply (91), respectively of each inverted U-shaped ply (91'), is comprised between 15 and 100 µm, **in that** the diameter of said structural fibers (40) are comprised between 5 and 11 µm, and **in that** the relative weight of each U-shaped ply (91), respectively of each inverted U-shaped ply (91'), is as low as 15 g/m².

7. The composite honeycomb according to any one of the preceding claims, **characterized in that** said plurality of contiguous cells (2) comprises at least one central cell (70) surrounded by six peripheral cells, namely a lower (71), a lower left (72), a lower right (73), an upper (74), an upper left (75) and an upper right (76) peripheral cell, said central cell (70) and said peripheral cells (71,72,73,74,75,76) being interconnected, forming together a cell group (80) and being arranged in such a manner that two continuities of fiber-reinforced material is provided in each corner of the central cell (70).

8. The composite honeycomb according to the preceding claim when dependent of claim 3 or 5, **characterized in that** each wall of said central cell (70) comprises a portion of U-shaped ply (91) and a portion of inverted U-shaped ply (91') so that each wall of said central cell comprises at least two plies.

9. The composite honeycomb according to any one of claims 7 to 8 when dependent to claim 3 or 5, **characterized**
- **in that** one of said two lower inclined cell walls (52) of said central cell (70) comprises one inclined side (8') of the inverted U-shaped ply (91') of said lower left peripheral cell (72) and the other lower inclined cell wall (52) of said central cell (70) comprises one inclined side (8') of the inverted U-shaped ply (91') of said lower right peripheral cell (73)
- and **in that** one of said two upper inclined cell walls (62) of said central cell (70) comprises one inclined side (8') of the U-shaped ply (91) of said upper left peripheral cell (75) and the other upper inclined cell wall (62) of said central cell (70) comprises one inclined side (8') of the U-shaped ply (91) of said upper right peripheral cell (76),
- so that stress and strain applied to said composite honeycomb (1) can be transmitted from said lower horizontal cell wall (51) of the central cell (70) to said upper horizontal cell wall (61) of said lower left peripheral cell (72), respectively to said upper horizontal cell wall (61) of said lower right peripheral cell (73), through one of said upper inclined cell walls (62) of said lower left peripheral cell (72), respectively through one of said upper inclined cell walls (62) of said lower right peripheral cell (73)
- and so that stress and strain applied to said composite honeycomb (1) can be transmitted from said upper horizontal cell walls (61) of the central cell (70) to said lower horizontal cell wall (51) of said upper left peripheral cell (75), respectively to said lower horizontal cell wall (51) of said upper right peripheral cell (76), through one of said lower inclined cell walls (52) of said upper left peripheral cell (75), respectively through one of said lower inclined cell walls (52) of said upper right peripheral cell (76).

10. A method of producing a composite honeycomb (1) formed of a plurality of honeycomb cells (2) each of substantially hexagonal cross-section and with each wall of said honeycomb cells (2) of substantially the same thickness, **characterized in** comprising the following steps:
a) producing at least four corrugated sheets (3,4,5,6,20,21), namely a first (3), a second (4), a third (5) and a fourth (6) corrugated sheet, by interconnecting a plurality of substantially U-shaped elements (9) with substantially inverted U-shaped elements (9'),
wherein said U-shaped elements (9), respectively said inverted U-shaped elements (9'), comprise each fiber-reinforced material comprising a plurality of structural fibers (40),
wherein said U-shaped elements (9) and said inverted U-shaped elements (9') comprise each a horizontal side (7) and two inclined sides (8),
and wherein each inclined side (8) of each U-shaped element (9) is brought into contact and bonded with one inclined side (8) of one of said inverted U-shaped elements (9'),
b) stacking said first (3), second (4), third (5) and fourth (6) corrugated sheets upon each other so as to form a corrugated sheets stack (30) and so as to obtain a plurality of substantially hexagonal honeycomb cells (2) by bringing into contact horizontal sides (7) of adjacent corrugated sheets (3,4,5,6),
c) stacking subsequent corrugated sheets (20,21) upon said corrugated sheets stack (30) according to the step b) until obtaining a desired width (w) of the composite honeycomb (1),
d) and bonding horizontal sides (7) of corrugated sheets (3,4,5,6,20,21) brought into contact either concomitantly as a whole or sequentially in pairs as one of said corrugated sheets (3,4,5,6,20,21) is stacked upon an other one.

11. The method of producing a composite honeycomb according to claim 10, wherein in step a) said plurality of structural fibers (40) are arranged to provide a continuity of fiber-reinforced material between said horizontal side (7') and said two inclined sides (8') of each U-shaped ply (91), respectively of each inverted U-shaped ply (91'), so that stress and strain applied to the composite honeycomb can be transmitted from said horizontal side (7') to said inclined sides (8').

12. The method of producing a composite honeycomb according to any one of claims 10 to 11, wherein in step a) said structural fibers (40) are arranged to lie essentially in a unidirectional orientation.

13. The method of producing a composite honeycomb according to any one of claims 10 to 12, wherein said U-shaped elements (9), respectively said inverted U-shaped elements (9'), comprise each at least one fiber-reinforced U-shaped ply (91), respectively at least one fiber-reinforced inverted U-shaped ply (91'), comprising each said plurality of structural fibers (40) and wherein said U-shaped plies (91) and said inverted U-shaped plies (91') comprise each a horizontal side (7') and two inclined sides (8'), and wherein in step a) said structural fibers (40) are arranged so that the orientation of the structural fibers (40) of said U-shaped ply (91) differs from the orientation of the structural fibers (40) of said inverted U-shaped ply (91').

14. The method of producing a composite honeycomb according to any one of claims 10 to 13, wherein in step a) said U-shaped elements (9), respectively said inverted U-shaped elements (9'), comprise each at least two fiber-reinforced U-shaped plies, respectively at least two fiber-reinforced inverted U-shaped plies, namely a first ply and a second ply, comprising said structural fibers (40) and wherein said structural fibers (40) are arranged so that the orientation of the structural fibers (40) of said first ply differs from the orientation of the structural fibers (40) of said second ply.

15. The method of producing a composite honeycomb according to any one of claims 10 to 14, wherein in step a) producing at least four corrugated sheets (3,4,5,6,20,21) comprises the following steps:
i) preparing a pair of mating molds, namely a first mold (11) and a second mold (11'), comprising each a molding surface (13,13') provided with flat sides (14,14') arranged in a horizontal plane (H) and with a plurality of uniformly distributed substantially trapezoid profiles (15,15') projecting with respect to said horizontal plane (H), said trapezoid profiles (15,15') comprising each a horizontal base (16,16') projecting with respect to said horizontal plane (H) and inclined legs (17,17') linking said horizontal base (16,16') to adjacent flat sides (14,14'),
ii) forming said U-shaped element (9) by covering each trapezoid profile (15) of the first mold (11) with a portion of a first fiber-reinforced prepreg ply (18) comprising said structural fibers (40), wherein each portion of first fiber-reinforced prepreg ply (18) covers the horizontal base (16) and the inclined legs (17) of one trapezoid profile (15) of said first mold (11),
iii) forming said inverted U-shaped element (9') by covering each trapezoid profile (15') of the second mold (11') with a portion of a second fiber-reinforced prepreg ply (18') comprising said structural fibers (40), wherein each portion of second fiber-reinforced prepreg ply (18') covers the horizontal base (16') and the inclined legs (17') of one trapezoid profile (15') of said second mold (11'),
iv) interconnecting a plurality of U-shaped elements (9) with inverted U-shaped elements (9') by assembling said pair of mating molds (11,11') so that sides (19) of said portions of first fiber-reinforced prepreg ply (18) covering the inclined legs (17) of the trapezoid profiles (15) of the first mold (11) are brought into contact with corresponding sides (19') of said portions of second fiber-reinforced prepreg ply (18') covering the inclined legs (17') of the trapezoid profiles (15') of the second mold (11'),
v) heat-hardening said portions of first and second fiber-reinforced prepreg plies (18,18') so as to bond said sides (19) of portions of first fiber-reinforced prepreg ply (18) with corresponding sides (19') of portions of second fiber-reinforced prepreg ply (18') and so as to obtain said first corrugated sheet (3),
vi) repeating the steps i) to v) so as to obtain said second (4), third (5) and fourth (6) corrugated sheets as well as eventually said subsequent corrugated sheets (20,21).

16. The method of producing a composite honeycomb according to claim 15, wherein in step iv) said pair of mating mold is assembled by turning over from each other the first mold 11 and the second mold 11'.

17. The method of producing a composite honeycomb according to claim 16, wherein the molding surface (13) of the first mold (11) is substantially identical to the molding surface (13') of the second mold (11'), wherein said trapezoid profiles (15,15') are substantially isosceles, said inclined legs (17,17') being inclined at substantially 120° relative to said horizontal base (16,16') and being of substantially same dimensions as said horizontal base (16,16'), wherein said flat sides (14,14') are substantially of same dimensions and wherein said horizontal base (16,16') are substantially of same dimensions as said flat sides (14,14'), and wherein in step ii), respectively iii), covering each isosceles trapezoid profile (15,15') of the first mold (11), respectively second mold (11'), with a portion of first fiber-reinforced prepreg ply (18), respectively second fiber-reinforced prepreg ply (18'), comprises the following steps:
- positioning a first fiber-reinforced prepreg ply (18), respectively second fiber-reinforced prepreg ply (18'), upon the molding surface (13,13') of the first mold (11), respectively second mold (11'),
- cutting said first fiber-reinforced prepreg ply (18), respectively second prepreg ply (18'), at every point corresponding to the middle distance between two adjacent isosceles trapezoid profiles (15,15') of the first mold (11), respectively second mold (11'), so that said portions of first fiber-reinforced prepreg ply (18), respectively second fiber-reinforced prepreg ply (18'), are generated and so that said portions of first fiber-reinforced prepreg ply (18), respectively second fiber-reinforced prepreg ply (18'), cover each isosceles trapezoid profile (15,15') of the first mold (11), respectively second mold (11').

18. The method of producing a composite honeycomb according to any one of claims 10 to 17, wherein in step b) horizontal sides (7) of U-shaped elements (9) of the corrugated sheets (3,4,5,6) are brought into contact with horizontal sides (7) of U-shaped elements (9) of adjacent corrugated sheet (3,4,5,6) by turning over from each other adjacent corrugated sheets (3,4,5,6), wherein in step b) horizontal sides (7) of U-shaped elements (9) of the corrugated sheets (3,4,5,6) are brought into contact with horizontal sides (7) of inverted U-shaped elements (9') of adjacent corrugated sheet (3,4,5,6) by displacing from each other adjacent corrugated sheets (3,4,5,6), wherein in step d) said horizontal sides (7) of corrugated sheets (3,4,5,6,20,21) brought into contact are bonded concomitantly as a whole by heat-hardening said corrugated sheets stack (30), and wherein in step d) said horizontal sides (7) of corrugated sheets (3,4,5,6,20,21) brought into contact are bonded sequentially in pairs as one of said corrugated sheets (3,4,5,6,20,21) is stacked upon an other one by gluing said horizontal sides (7) brought into contact.

## Patentansprüche

1. Verbundstoffwabenstruktur (1), umfassend eine Vielzahl von angrenzenden Zellen (2) mit jeweils im Wesentlichen sechseckigem Querschnitt,
- wobei jede Zelle (2) ein Unterteil (50) und ein Oberteil (60) umfasst, wobei das Unterteil (50) drei untere Zellwände, nämlich eine untere horizontale Zellwand (51) und zwei untere schräge Zellwände (52) umfasst, und das Oberteil (60) drei obere Zellwände, nämlich eine obere horizontale Zellwand (61) und zwei obere schräge Zellwände (62) umfasst, wobei
- jede der Zellwände (51, 52, 61, 62) im Wesentlichen die gleiche Dicke hat, **dadurch gekennzeichnet,**
- **dass** das Unterteil (50) faserverstärktes Material umfasst, das eine Vielzahl von Strukturfasern (40) einschließt, die so angeordnet sind, dass sie eine Kontinuität von faserverstärktem Material zwischen der unteren horizontalen Zellwand (51) und den beiden unteren schrägen Zellwänden (52) des Unterteils (50) bereitstellen,
- und **dadurch gekennzeichnet, dass** jedes Oberteil (60) faserverstärktes Material umfasst, das eine Vielzahl von Strukturfasern (40) einschließt, die so angeordnet sind, dass sie eine Kontinuität von faserverstärktem Material zwischen der oberen horizontalen Zellwand (61) und den beiden oberen schrägen Zellwänden (62) des Oberteils (60) bereitstellen,
- so dass Beanspruchung und Belastung, die auf die Verbundstoffwabenstruktur (1) ausgeübt werden, von den horizontalen Zellwänden (51, 61) auf jeweilige schräge Zellwände (52, 62) übertragen werden können.

2. Verbundstoffwabenstruktur nach einem der vorhergehenden Ansprüche, **dadurch gekennzeichnet, dass** die Zellen (2) jeweils einen im Wesentlichen regelmäßigen sechseckigen Querschnitt aufweisen, wobei die horizontale Zellwand (51, 61) und die schrägen Zellwände (52, 62) im Wesentlichen die gleichen Abmessungen haben und die schrägen Zellwände (52, 62) im Wesentlichen 120° relativ zu der horizontalen Zellwand (51, 61) geneigt sind.

3. Verbundstoffwabenstruktur nach einem der vorhergehenden Ansprüche, **dadurch gekennzeichnet**
- **dass** jedes Unterteil (50) mindestens eine U-förmige Lage (91) umfasst, die eine horizontale Seite (7') und zwei schräge Seiten (8') umfasst, wobei die U-förmige Lage (91), die das faserverstärkte Material umfasst, eine Vielzahl von Strukturfasern (40) einschließt, die so angeordnet sind, dass sie eine Kontinuität des faserverstärkten Materials zwischen der unteren horizontalen Zellwand (51) und den beiden unteren schrägen Zellwänden (52) des Unterteils (50) bereitstellen,
- und **dass** jedes Oberteil (60) mindestens eine umgekehrt U-förmige Lage (91') umfasst, die eine horizontale Seite (7') und zwei schräge Seiten (8') umfasst, wobei die umgekehrt U-förmige Lage (91'), die das faserverstärkte Material umfasst, eine Vielzahl von Strukturfasern (40) einschließt, die so angeordnet sind, dass sie eine Kontinuität des faserverstärkten Materials zwischen der oberen horizontalen Zellwand (61) und den beiden oberen schrägen Zellwänden (62) des Oberteils (60) bereitstellen.

4. Verbundstoffwabenstruktur nach einem der vorhergehenden Ansprüche, **dadurch gekennzeichnet, dass** die Strukturfasern (40) so angeordnet sind, dass sie im Wesentlichen in einer unidirektionalen Orientierung liegen, und dass sie so angeordnet sind, dass die Orientierung der Strukturfasern (40) der U-förmigen Lage (91) sich von der Orientierung der Strukturfasern (40) der umgekehrt U-förmigen Lage (91') unterscheidet.

5. Verbundstoffwabenstruktur nach einem der vorhergehenden Ansprüche, **dadurch gekennzeichnet, dass** das Unterteil (50) beziehungsweise das Oberteil (60) jeweils mindestens zwei faserverstärkte U-förmige Lagen beziehungsweise mindestens zwei faserverstärkte umgekehrte U-förmige Lagen umfasst, nämlich eine erste Lage und eine zweite Lage, die die Strukturfasern (40) umfassen, und wobei die Strukturfasern (40) so angeordnet sind, dass die Orientierung der Strukturfasern (40) der ersten Lage sich von der Orientierung der Strukturfasern (40) der zweiten Lage unterscheidet.

6. Verbundstoffwabenstruktur nach einem der Ansprüche 3 bis 5, **dadurch gekennzeichnet, dass** die Strukturfasern (40) so ausgewählt und angeordnet sind, dass die Dicke jeder U-förmigen Lage (91) beziehungsweise jeder umgekehrt U-förmigen Lage (91') zwischen 15 und 100 µm liegt, dass der Durchmesser der Strukturfasern (40) zwischen 5 und 11 µm liegt und dass das relative Gewicht jeder U-förmigen Lage (91) beziehungsweise jeder umgekehrt U-förmigen Lage (91') so niedrig wie 15 g/m² ist.

7. Verbundstoffwabenstruktur nach einem der vorhergehenden Ansprüche, **dadurch gekennzeichnet, dass** die Vielzahl der angrenzenden Zellen (2) mindestens eine zentrale Zelle (70) umfasst, die von sechs peripheren Zellen umgeben ist, nämlich einer unteren (71), einer unteren linken (72), einer unteren rechten (73), einer oberen (74), einer oberen linken (75) und einer oberen rechten (76) peripheren Zelle, wobei die zentrale Zelle (70) und die peripheren Zellen (71, 72, 73, 74, 75, 76) miteinander verbunden sind, wobei sie zusammen eine Zellgruppe (80) bilden, und wobei sie in einer solchen Weise angeordnet sind, dass in jeder Ecke der zentralen Zelle (70) zwei Kontinuitäten des faserverstärkten Materials bereitgestellt werden.

8. Verbundstoffwabenstruktur nach einem der vorhergehenden Ansprüche in Abhängigkeit von Anspruch 3 oder 5, **dadurch gekennzeichnet, dass** jede Wand der zentralen Zelle (70) einen Abschnitt der U-förmigen Lage (91) und einen Abschnitt der umgekehrten U-förmigen Lage (91') umfasst, so dass jede Wand der zentralen Zelle mindestens zwei Lagen umfasst.

9. Verbundstoffwabenstruktur nach einem der Ansprüche 7 bis 8 in Abhängigkeit von Anspruch 3 oder 5, **dadurch gekennzeichnet, dass**
- eine der beiden unteren schrägen Zellwände (52) der zentralen Zelle (70) eine schräge Seite (8') der umgekehrt U-förmigen Lage (91') der unteren linken peripheren Zelle (72) umfasst und die andere untere schräge Zellwand (52) der zentralen Zelle (70) eine schräge Seite (8') der umgekehrt U-förmigen Lage (91') der unteren rechten peripheren Zelle (73) umfasst,
- und eine der beiden oberen schrägen Zellwände (62) der zentralen Zelle (70) eine schräge Seite (8') der U-förmigen Lage (91) der oberen linken peripheren Zelle (75) umfasst und die andere obere schräge Zellwand (62) der zentralen Zelle (70) eine schräge Seite (8') der U-förmigen Lage (91) der oberen rechten peripheren Zelle (76) umfasst,
- so dass auf die Verbundstoffwabenstruktur (1) ausgeübte Beanspruchung und Belastung von der unteren horizontalen Zellwand (51) der zentralen Zelle (70) auf die obere horizontale Zellwand (61) der unteren linken peripheren Zelle (72) beziehungsweise die obere horizontale Zellwand (61) der unteren rechten peripheren Zelle (73) über eine der oberen schrägen Zellwände (62) der unteren linken peripheren Zelle (72) beziehungsweise über eine der oberen schrägen Zellwänden (62) der unteren rechten peripheren Zelle (73) übertragen werden kann,
- und so dass auf die Verbundstoffwabenstruktur (1) ausgeübte Beanspruchung und Belastung von den oberen horizontalen Zellwänden (61) der zentralen Zelle (70) auf die untere horizontale Zellwand (51) der oberen linken peripheren Zelle (75) beziehungsweise die untere horizontale Zellwand (51) der oberen rechten peripheren Zelle (76) über eine der unteren schrägen Zellwände (52) der oberen linken peripheren Zelle (75) beziehungsweise über eine der unteren schrägen Zellwänden (52) der oberen rechten peripheren Zelle (76) übertragen werden können.

10. Verfahren zur Herstellung einer Verbundstoffwabenstruktur (1), die aus einer Vielzahl von Wabenstrukturzellen (2) mit jeweils im Wesentlichen sechseckigem Querschnitt gebildet ist, und wobei jede Wand der Wabenstrukturzellen (2) im Wesentlichen dieselbe Dicke hat, **dadurch gekennzeichnet, dass** es die folgenden Schritte umfasst:
a) Herstellen von mindestens vier Wellplatten (3, 4, 5, 6, 20, 21), nämlich einer ersten (3), einer zweiten (4), einer dritten (5) und einer vierten (6) Wellplatte, indem eine Vielzahl von im Wesentlichen U-förmigen Elementen (9) mit im Wesentlichen umgekehrt U-förmigen Elementen (9') verbunden wird,
wobei die U-förmigen Elemente (9) beziehungsweise die umgekehrt U-förmigen Elemente (9') jeweils faserverstärktes Material umfassen, das eine Vielzahl von Strukturfasern (40) umfasst,
wobei die U-förmigen Elemente (9) und die umgekehrt U-förmigen Elemente (9') jeweils eine horizontale Seite (7) und zwei schräge Seiten (8) umfassen,
und wobei jede schräge Seite (8) jedes U-förmigen Elements (9) mit einer schrägen Seite (8) von einem der umgekehrt U-förmigen Elemente (9') in Kontakt gebracht und gebondet wird,
b) Stapeln der ersten (3), zweiten (4), dritten (5) und vierten (6) Wellplatten aufeinander, um so einen Wellplattenstapel (30) zu bilden und so eine Vielzahl von im Wesentlichen sechseckigen Wabenstrukturzellen (2) zu erhalten, indem horizontale Seiten (7) benachbarter Wellplatten (3, 4, 5, 6) in Kontakt miteinander gebracht werden,
c) Stapeln folgender Wellplatten (20, 21) auf den Wellplattenstapel (30) gemäß Schritt b), bis eine gewünschte Breite (w) der Verbundstoffwabenstruktur (1) erhalten wird,
d) und Bonden von horizontalen Seiten (7) der in Kontakt gebrachten Wellplatten (3, 4, 5, 6, 20, 21) entweder gleichzeitig als ganzes oder sequentiell in Paaren, wenn eine der Wellplatten (3, 4, 5, 6, 20, 21) auf eine andere gestapelt wird.

11. Verfahren zur Herstellung einer Verbundstoffwabenstruktur nach Anspruch 10, wobei in Schritt a) die Vielzahl von Strukturfasern (40) so angeordnet ist, dass sie eine Kontinuität des faserverstärkten Materials zwischen der horizontalen Seite (7') und den beiden schrägen Seiten (8') jeder U-förmigen Lage (91) beziehungsweise jeder umgekehrt U-förmigen Lage (91') bereitstellen, so dass auf die Verbundstoffwabenstruktur ausgeübte Beanspruchung und Belastung von der horizontalen Seite (7') auf die schrägen Seiten (8') übertragen werden können.

12. Verfahren zur Herstellung einer Verbundstoffwabenstruktur nach einem der Ansprüche 10 bis 11, wobei in Schritt a) die Strukturfasern (40) so angeordnet sind, dass sie im Wesentlichen in einer unidirektionalen Orientierung liegen.

13. Verfahren zur Herstellung einer Verbundstoffwabenstruktur nach einem der Ansprüche 10 bis 12, wobei die U-förmigen Elemente (9) beziehungsweise die umgekehrt U-förmigen Elemente (9') jeweils mindestens eine faserverstärkte U-förmige Lage (91) beziehungsweise mindestens eine faserverstärkte umgekehrte U-förmige Lage (91') umfassen, die jeweils die Vielzahl von Strukturfasern (40) umfasst, und wobei die U-förmigen Lagen (91) und die umgekehrten U-förmigen Lagen (91') jeweils eine horizontale Seite (7') und zwei schräge Seiten (8') umfassen, und wobei in Schritt a) die Strukturfasern (40) so angeordnet sind, dass die Orientierung der Strukturfasern (40) der U-förmigen Lage (91) sich von der Orientierung der Strukturfasern (40) der umgekehrt U-förmigen Lage (91') unterscheidet.

14. Verfahren zur Herstellung einer Verbundstoffwabenstruktur nach einem der Ansprüche 10 bis 13, wobei in Schritt a) die U-förmigen Elemente (9) beziehungsweise die umgekehrt U-förmigen Elemente (9') jeweils mindestens zwei faserverstärkte U-förmige Lagen beziehungsweise mindestens zwei faserverstärkte umgekehrte U-förmige Lagen umfassen, nämlich eine erste Lage und eine zweite Lage, die die Strukturfasern (40) umfassen, und wobei die Strukturfasern (40) so angeordnet sind, dass die Orientierung der Strukturfasern (40) der ersten Lage sich von der Orientierung der Strukturfasern (40) der zweiten Lage unterscheidet.

15. Verfahren zur Herstellung einer Verbundstoffwabenstruktur nach einem der Ansprüche 10 bis 14, wobei in Schritt a) das Herstellen von mindestens vier Wellplatten (3, 4, 5, 6, 20, 21) die folgenden Schritte umfasst:
i) Vorbereiten eines Paars von zusammenpassenden Formen, nämlich einer ersten Form (11) und einer zweiten Form (11'), die jeweils eine Formungsoberfläche (13, 13') umfassen, die mit flachen Seiten (14, 14'), die in einer horizontalen Ebene (H) angeordnet sind, und mit einer Vielzahl von gleichförmig verteilten, im Wesentlichen trapezoiden Profilen (15, 15') versehen ist, die in Bezug auf die horizontale Ebene (H) hervorragen, wobei die trapezoiden Profile (15, 15') jeweils eine horizontale Basis (16, 16'), die in Bezug auf die horizontale Ebene (H) hervorragt, und schräge Schenkel (17, 17') umfassen, die die horizontale Basis (16, 16') mit benachbarten flachen Seiten (14, 14') verbindet,
ii) Bilden des U-förmigen Elements (9) durch Bedecken jedes trapezoiden Profils (15) der ersten Form (11) mit einem Abschnitt einer ersten faserverstärkten Prepreglage (18), die die Strukturfasern (40) umfasst, wobei jeder Abschnitt der ersten faserverstärkten Prepreglage (18) die horizontale Basis (16) und die schrägen Schenkel (17) von einem trapezoiden Profil (15) der ersten Form (11) bedeckt,
iii) Bilden des umgekehrt U-förmigen Elements (9') durch Bedecken jedes trapezoiden Profils (15') der zweiten Form (11') mit einem Abschnitt einer zweiten faserverstärkten Prepreglage (18'), die die Strukturfasern (40) umfasst, wobei jeder Abschnitt der zweiten faserverstärkten Prepreglage (18') die horizontale Basis (16') und die schrägen Schenkel (17') von einem trapezoiden Profil (15') der zweiten Form (11') bedeckt,
iv) Verbinden einer Vielzahl von U-förmigen Elementen (9) mit umgekehrt U-förmigen Elementen (9') durch Zusammensetzen des Paars von zusammenpassenden Formen (11, 11'), so dass Seiten (19) der Abschnitte der ersten faserverstärkten Prepreglage (18), die die schrägen Schenkel (17) der trapezoiden Profile (15) der ersten Form (11) bedecken, in Kontakt mit entsprechenden Seiten (19') der Abschnitte der zweiten faserverstärkten Prepreglage (18') gebracht werden, die die schrägen Schenkel (17') der trapezoiden Profile (15') der zweiten Form (11') bedecken,
v) Wärmehärten der Abschnitte der ersten und zweiten faserverstärkten Prepreglagen (18, 18'), um so die Seiten (19) der Abschnitte der ersten faserverstärkten Prepreglage (18) mit entsprechenden Seiten (19') der Abschnitten der zweiten faserverstärkten Prepreglage (18') zu bonden und so die erste Wellplatte (3) zu erhalten,
vi) Wiederholen der Schritte i) bis v), um so die zweite (4), dritte (5) und vierte (6) Wellplatte sowie schließlich die folgenden Wellplatten (20, 21) zu erhalten.

16. Verfahren zur Herstellung einer Verbundstoffwabenstruktur nach Anspruch 15, wobei in Schritt iv) das Paar der zusammenpassenden Form zusammengesetzt wird, indem die erste Form 11 und die zweite Form 11' zueinander umgedreht werden.

17. Verfahren zur Herstellung einer Verbundstoffwabenstruktur nach Anspruch 16, wobei die Formungsoberfläche (13) der ersten Form (11) im Wesentlichen mit der Formungsoberfläche (13') der zweiten Form (11') identisch ist, wobei die trapezoiden Profile (15, 15') im Wesentlichen gleichschenklig sind, wobei die schrägen Schenkel (17, 17') im Wesentlichen 120° relativ zu der horizontalen Basis (16, 16') geneigt sind und im Wesentlichen die gleichen Dimensionen wie die horizontale Basis (16, 16') haben, wobei die flachen Seiten (14, 14') im Wesentlichen die gleichen Dimensionen haben und wobei die horizontale Basis (16, 16') im Wesentlichen die gleichen Dimensionen wie die flachen Seiten (14, 14') hat, und wobei in Schritt ii) beziehungsweise iii) jedes gleichschenklige trapezoide Profil (15, 15') der ersten Form beziehungsweise der zweiten Form (11') mit einem Abschnitt der ersten faserverstärkten Prepreglage (18) beziehungsweise zweiten faserverstärkten Prepreglage (18') bedeckt wird, umfassend die folgenden Schritte:
- Positionieren einer ersten faserverstärkten Prepreglage (18) beziehungsweise zweiten faserverstärkten Prepreglage (18') auf der Formungsoberfläche (13, 13') der ersten Form (11) beziehungsweise der zweiten Form (11'),
- Schneiden der ersten faserverstärkten Prepreglage (18) beziehungsweise der zweiten Prepreglage (18') an jedem Punkt, der dem Mittelabstand zwischen zwei benachbarten gleichschenkligen trapezoiden Profilen (15, 15') der ersten Form (11) beziehungsweise der zweiten Form (11') entspricht, so dass die Abschnitte der ersten faserverstärkten Prepreglage (18) beziehungsweise zweiten faserverstärkten Prepreglage (18') generiert werden, und so dass die Abschnitte der ersten faserverstärkten Prepreglage (18) beziehungsweise der zweiten faserverstärkten Prepreglage (18') jedes gleichschenklige trapezoide Profil (15, 15') der ersten Form (11) beziehungsweise der zweiten Form (11') bedecken.

18. Verfahren zur Herstellung einer Verbundstoffwabenstruktur nach einem der Ansprüche 10 bis 17, wobei in Schritt b) horizontale Seiten (7) von U-förmigen Elementen (9) der Wellplatten (3, 4, 5, 6) in Kontakt mit horizontalen Seiten (7) der U-förmigen Elemente (9) von benachbarten Wellplatten (3, 4, 5, 6) gebracht werden, indem benachbarte Wellplatten (3, 4, 5, 6) zueinander umgedreht werden, wobei in Schritt b) horizontale Seiten (7) von U-förmigen Elementen (9) der Wellplatten (3, 4, 5, 6) in Kontakt mit horizontalen Seiten (7) von umgekehrt U-förmigen Elementen (9') von benachbarten Wellplatten (3, 4, 5, 6) gebracht werden, indem benachbarte Wellplatten (3, 4, 5, 6) zueinander verschoben werden, wobei in Schritt d) die horizontalen Seiten (7) der in Kontakt gebrachten Wellplatten (3, 4, 5, 6, 20, 21) gleichzeitig als ganzes durch Wärmehärten der Wellplattenstapel (30) gebondet werden, und wobei in Schritt d) die horizontalen Seiten (7) der in Kontakt gebrachten Wellplatten (3, 4, 5, 6, 20, 21) sequentiell in Paaren gebondet werden, wenn eine der Wellplatten (3, 4, 5, 6, 20, 21) auf eine andere gestapelt wird, indem die in Kontakt gebrachten horizontalen Seiten (7) verklebt werden.

## Revendications

1. Nid d'abeille composite (1) comprenant une pluralité de cellules (2) contiguës présentant chacune une section transversale sensiblement hexagonale,
- chaque cellule (2) comprenant une partie (50) inférieure et une partie (60) supérieure, ladite partie (50) inférieure comprenant trois parois cellulaires inférieures, à savoir une paroi cellulaire (51) inférieure horizontale et deux parois cellulaires (52) inférieures inclinées, et ladite partie (60) supérieure comprenant trois parois cellulaires supérieures, à savoir une paroi cellulaire (61) supérieure horizontale et deux parois cellulaires (62) supérieures inclinées,
chacune desdites parois cellulaires (51, 52, 61, 62) présentant sensiblement la même épaisseur, **caractérisé**
- **en ce que** chaque partie (50) inférieure comprend un matériau renforcé par des fibres comprenant une pluralité de fibres structurales (40) disposées pour réaliser une continuité de matériau renforcé par des fibres entre ladite paroi cellulaire (51) inférieure horizontale et lesdites deux parois cellulaires (52) inférieures inclinées de ladite partie (50) inférieure,
- et **en ce que** chaque partie (60) supérieure comprend un matériau renforcé par des fibres comprenant une pluralité de fibres structurales (40) disposées pour réaliser une continuité de matériau renforcé par des fibres entre ladite paroi cellulaire (61) supérieure horizontale et lesdites deux parois cellulaires (62) supérieures inclinées de ladite partie (60) supérieure,
- de telle sorte qu'une tension et une contrainte appliquées audit nid d'abeille composite (1) peuvent être transmises à partir desdites parois cellulaires (51, 61) horizontales aux parois cellulaires (52, 62) inclinées respectives.

2. Nid d'abeille composite selon la revendication précédente, **caractérisé en ce que** lesdites cellules (2) présentent chacune une section transversale hexagonale sensiblement régulière, ladite paroi cellulaire (51, 61) horizontale et lesdites parois cellulaires (52, 62) inclinées présentant sensiblement les mêmes dimensions et lesdites parois cellulaires (52, 62) inclinées étant inclinées sensiblement à 120° par rapport à ladite paroi cellulaire (51, 61) horizontale.

3. Nid d'abeille composite selon l'une quelconque des revendications précédentes **caractérisé**
- **en ce que** chaque partie (50) inférieure comprend au moins un pli (91) en forme de U, comprenant un côté (7') horizontal et deux côtés (8') inclinés, ledit pli (91) en forme de U comprenant ledit matériau renforcé par des fibres comprenant une pluralité de fibres structurales (40) disposée pour réaliser une continuité de matériau renforcé par des fibres entre ladite paroi cellulaire (51) inférieure horizontale et lesdites deux parois cellulaires (52) inférieures inclinées de ladite partie (50) inférieure
- et **en ce que** chaque partie (60) supérieure comprend au moins un pli (91') en forme de U inversé comprenant un côté (7') horizontal et deux côtés (8') inclinés, ledit pli (91') en forme de U inversé comprenant ledit matériau renforcé par des fibres comprenant une pluralité de fibres structurales (40) disposée pour réaliser une continuité de matériau renforcé par des fibres entre ladite paroi cellulaire (61) supérieure horizontale et lesdites deux parois cellulaires (62) supérieures inclinées de ladite partie (60) supérieure.

4. Nid d'abeille composite selon l'une quelconque des revendications précédentes, **caractérisé en ce que** lesdites fibres structurales (40) sont disposées pour se trouver essentiellement dans une orientation unidirectionnelle et sont disposées de manière telle que l'orientation des fibres structurales (40) dudit pli (91) en forme de U diffère de l'orientation des fibres structurales (40) dudit pli (91') en forme de U inversé.

5. Nid d'abeille composite selon l'une quelconque des revendications précédentes, **caractérisé en ce que** ladite partie (50) inférieure, respectivement ladite partie (60) supérieure, comprennent chacune au moins deux plis en forme de U renforcés par des fibres, respectivement au moins deux plis en forme de U inversé renforcés par des fibres, à savoir un premier pli et un deuxième pli, comprenant lesdites fibres structurales (40) et **en ce que** lesdites fibres structurales (40) sont disposées de manière telle que l'orientation des fibres structurales (40) du premier pli diffère de l'orientation des fibres structurales dudit deuxième pli.

6. Nid d'abeille composite selon l'une quelconque des revendications 3 à 5, **caractérisé en ce que** lesdites fibres structurales (40) sont choisies et disposées de manière telle que l'épaisseur de chaque pli (91) en forme de U, respectivement de chaque pli (91') en forme de U inversé, est comprise entre 15 et 100 µm, **en ce que** le diamètre desdites fibres structurales (40) est compris entre 5 et 11 µm et **en ce que** le poids relatif de chaque pli (91) en forme de U, respectivement de chaque pli (91') en forme de U inversé, est aussi bas que 15 g/m².

7. Nid d'abeille composite selon l'une quelconque des revendications précédentes, **caractérisé en ce que** ladite pluralité de cellules (2) contiguës comprend au moins une cellule (70) centrale entourée par six cellules périphériques, à savoir une cellule (71) périphérique inférieure, une cellule (72) périphérique inférieure gauche, une cellule (73) périphérique inférieure droite, une cellule (74) périphérique supérieure, une cellule (75) périphérique supérieure gauche et une cellule (76) périphérique supérieure droite, ladite cellule (70) centrale et lesdites cellules (71, 72, 73, 74, 75, 76) périphériques étant interconnectées, formant ensemble un groupe (80) de cellules et étant disposées de manière telle que deux continuités de matériau renforcé par des fibres sont réalisées dans chaque coin de la cellule (70) centrale.

8. Nid d'abeille composite selon la revendication précédente, lorsqu'elle dépend de la revendication 3 ou 5, **caractérisé en ce que** chaque paroi de ladite cellule (70) centrale comprend une partie de pli (91) en forme de U et une partie de pli (91') en forme de U inversé de manière telle que chaque paroi de ladite cellule centrale comprend au moins deux plis.

9. Nid d'abeille composite selon l'une quelconque des revendications 7 à 8, lorsqu'elle dépend de la revendication 3 ou 5, **caractérisé**
- **en ce qu'**une desdites deux parois cellulaires (52) inférieures inclinées de ladite cellule (70) centrale comprend un côté (8') incliné du pli (91') en forme de U inversé de ladite cellule (72) périphérique inférieure gauche et l'autre paroi cellulaire (52) inférieure inclinée de ladite cellule (70) centrale comprend un côté (8') incliné du pli (91') en forme de U inversé de ladite cellule (73) périphérique inférieure droite
- et **en ce qu'**une desdites deux parois cellulaires (62) supérieures inclinées de ladite cellule (70) centrale comprend un côté (8') incliné du pli (91) en forme de U de ladite cellule (75) périphérique supérieure gauche et l'autre paroi cellulaire (62) supérieure inclinée de ladite cellule (70) centrale comprend un côté (8') incliné du pli (91) en forme de U de ladite cellule (76) périphérique supérieure droite,
- de manière telle que la tension et la contrainte appliquées audit nid d'abeille composite (1) peuvent être transmises à partir de ladite paroi cellulaire (51) inférieure horizontale de la cellule (70) centrale à ladite paroi cellulaire (61) supérieure horizontale de ladite cellule (72) périphérique inférieure gauche, respectivement à lesdites parois cellulaires (61) supérieure horizontale de ladite cellule (73) périphérique inférieure droite, via l'une desdites parois cellulaires (62) supérieures inclinées de ladite cellule (72) périphérique inférieure gauche, respectivement via l'une desdites parois cellulaires (62) supérieures inclinées de ladite cellule (73) périphérique inférieure droite
- et de manière telle que la tension et la contrainte appliquées audit nid d'abeille composite (1) peuvent être transmises à partir de lesdites parois cellulaires (61) supérieure horizontale de la cellule (70) centrale à ladite paroi cellulaire (51) inférieure horizontale de ladite cellule (75) périphérique supérieure gauche, respectivement à ladite paroi cellulaire (51) inférieure horizontale de ladite cellule (76) périphérique supérieure droite, via l'une desdites parois cellulaires (52) inférieures inclinées de ladite cellule (75) périphérique supérieure gauche, respectivement via l'une desdites parois cellulaires (52) inférieures inclinées de ladite cellule (76) périphérique supérieure droite.

10. Procédé pour produire un nid d'abeille composite (1) formé par une pluralité de cellules (2) de nid d'abeille, présentant chacune une section transversale sensiblement hexagonale et chaque paroi desdites cellules (2) de nid d'abeille présentant sensiblement la même épaisseur, **caractérisé en ce qu'**il comprend les étapes suivantes, consistant à :
a) produire au moins quatre feuilles (3, 4, 5, 6, 20, 21) ondulées, à savoir une première (3), une deuxième (4), une troisième (5) et une quatrième (6) feuille ondulée par interconnexion d'une pluralité d'éléments (9) sensiblement en forme de U avec des éléments (9') sensiblement en forme de U inversé,
lesdits éléments (9) en forme de U, respectivement lesdits éléments (9') en forme de U inversé, comprenant chacun un matériau renforcé par des fibres comprenant une pluralité de fibres structurales (40),
lesdits éléments (9) en forme de U et lesdits éléments (9') en forme de U inversé comprenant chacun un côté (7) horizontal et deux côtés (8) inclinés,
et chaque côté (8) incliné de chaque élément (9) en forme de U étant amené en contact et lié avec un côté (8) incliné d'un desdits éléments (9') en forme de U inversé,
b) empiler ladite première (3), ladite deuxième (4), ladite troisième (5) et ladite quatrième (6) feuille ondulée les unes sur les autres de manière à former une pile (30) de feuilles ondulées et de manière à obtenir une pluralité de cellules (2) de nid d'abeille sensiblement hexagonales par la mise en contact des côtés (7) horizontaux de feuilles (3, 4, 5, 6) ondulées adjacentes,
c) empiler des feuilles (20, 21) ondulées consécutives sur ladite pile (30) de feuilles ondulées selon l'étape b) jusqu'à l'obtention d'une largeur (w) souhaitée du nid d'abeille composite (1),
d) et lier les côtés (7) horizontaux de feuilles (3, 4, 5, 6, 20, 21) ondulées amenés en contact, soit de manière concomitante dans leur ensemble, soit séquentiellement par paires, au fur et à mesure qu'une des feuilles (3, 4, 5, 6, 20, 21) ondulées est empilée sur une autre.

11. Procédé pour produire un nid d'abeille composite selon la revendication 10, dans lequel, dans l'étape a), ladite pluralité de fibres structurales (40) est disposée pour réaliser une continuité de matériau renforcé par des fibres entre ledit côté (7') horizontal et lesdits deux côtés (8') inclinés de chaque pli (91) en forme de U, respectivement de chaque pli (91') en forme de U inversé, de manière telle que la tension et la contrainte appliquées au nid d'abeille composite peuvent être transmises à partir dudit côté (7') horizontal auxdits côtés (8') inclinés.

12. Procédé pour produire un nid d'abeille composite selon l'une quelconque des revendications 10 à 11, dans lequel, dans l'étape a), lesdites fibres structurales (40) sont disposées pour se trouver essentiellement dans une orientation unidirectionnelle.

13. Procédé pour produire un nid d'abeille composite selon l'une quelconque des revendications 10 à 12, dans lequel lesdits éléments (9) en forme de U, respectivement lesdits éléments (9') en forme de U inversé, comprennent chacun au moins un pli (91) en forme de U renforcé par des fibres, respectivement au moins un pli (91') en forme de U inversé renforcé par des fibres, comprenant chacun ladite pluralité de fibres structurales (40) et dans lequel lesdits plis (91) en forme de U et lesdits plis (91') en forme de U inversé comprennent chacun un côté (7') horizontal et deux côtés (8') inclinés et dans lequel, dans l'étape a), lesdites fibres structurales (40) sont disposées de manière telle que l'orientation des fibres structurales (40) dudit pli (91) en forme de U diffère de l'orientation des fibres structurales (40) dudit pli (91') en forme de U inversé.

14. Procédé pour produire un nid d'abeille composite selon l'une quelconque des revendications 10 à 13, dans lequel, dans l'étape a), lesdits éléments (9) en forme de U, respectivement lesdits éléments (9') en forme de U inversé, comprennent chacun au moins deux plis en forme de U, renforcés par des fibres, respectivement au moins deux plis en forme de U inversé, renforcés par des fibres, à savoir un premier pli et un deuxième pli, comprenant lesdites fibres structurales (40) et dans lequel lesdites fibres structurales (40) sont disposées de manière telle que l'orientation des fibres structurales (40) dudit premier pli diffère de l'orientation des fibres structurales (40) dudit deuxième pli.

15. Procédé pour produire un nid d'abeille composite selon l'une quelconque des revendications 10 à 14, dans lequel l'étape a), consistant à produire au moins quatre feuilles (3, 4, 5, 6, 20, 21) ondulées, comprend les étapes suivantes consistant à :
i) préparer une paire de moules conjugués, à savoir un premier moule (11) et un deuxième moule (11'), comprenant chacun une surface de moulage (13, 13') pourvue de côtés (14, 14') plats disposés dans un plan (H) horizontal et d'une pluralité de profils (15, 15') sensiblement trapézoïdaux distribués uniformément, en saillie par rapport audit plan (H) horizontal, lesdits profils (15, 15') trapézoïdaux comprenant chacun une base (16, 16') horizontale en saillie par rapport audit plan (H) horizontal et des jambes (17, 17') inclinées reliant ladite base (16, 16') horizontale aux côtés (14, 14') plats adjacents,
ii) former ledit élément (9) en forme de U par recouvrement de chaque profil (15) trapézoïdal du premier moule (11) par une partie d'un premier pli (18) préimprégné renforcé par des fibres comprenant lesdites fibres structurales (40), chaque partie du premier pli (18) préimprégné renforcé par des fibres recouvrant la base (16) horizontale et les jambes (17) inclinées d'un profil (15) trapézoïdal dudit premier moule (11),
iii) former ledit élément (9') en forme de U inversé par recouvrement de chaque profil (15') trapézoïdal du deuxième moule (11') par une partie d'un deuxième pli (18') préimprégné renforcé par des fibres comprenant lesdites fibres structurales (40), chaque partie du deuxième pli (18') préimprégné renforcé par des fibres recouvrant la base (16') horizontale et les jambes (17') inclinées d'un profil (15') trapézoïdal dudit deuxième moule (11'),
iv) interconnecter une pluralité d'éléments (9) en forme de U avec des éléments (9') en forme de U inversé par assemblage de ladite paire de moules (11, 11') conjugués de manière telle que les côtés (19) desdites parties du premier pli (18) préimprégné renforcé par des fibres recouvrant les jambes (17) inclinées des profils (15) trapézoïdaux du premier moule (11) sont mis en contact avec les côtés (19') correspondants desdites parties du deuxième pli (18') préimprégné renforcé par des fibres recouvrant les jambes (17') inclinées des profils (15') trapézoïdaux du deuxième moule (11'),
v) thermodurcir lesdites parties du premier et du deuxième pli (18, 18') préimprégnés renforcés par des fibres de manière à lier lesdits côtés (19) de parties du premier pli (18) préimprégné renforcé par des fibres aux côtés (19') correspondants de parties du deuxième pli (18') préimprégné renforcé par des fibres et de manière à obtenir ladite première feuille (3) ondulée,
vi) répéter les étapes i) à v) de manière à obtenir ladite deuxième (4), ladite troisième (5) et ladite quatrième (6) feuille ondulée ainsi qu'éventuellement lesdites feuilles (20, 21) ondulées consécutives.

16. Procédé pour produire un nid d'abeille composite selon la revendication 15, dans lequel, dans l'étape iv), ladite paire de moules conjugués est assemblée par retournement respectif du premier moule 11 et du deuxième moule 11'.

17. Procédé pour produire un nid d'abeille composite selon la revendication 16, dans lequel la surface (13) de moulage du premier moule (11) est sensiblement identique à la surface de moulage (13') du deuxième moule (11'), dans lequel lesdits profils (15, 15') trapézoïdaux sont sensiblement isocèles, lesdites jambes (17, 17') inclinées sont inclinées sensiblement à 120° par rapport à ladite base (16, 16') horizontale et présentent sensiblement les mêmes dimensions que ladite base (16, 16') horizontale, dans lequel lesdits côtés (14, 14') plats présentent sensiblement les mêmes dimensions et dans lequel ladite base (16, 16') horizontale présente sensiblement les mêmes dimensions que les côtés (14, 14') plats et dans lequel, dans l'étape ii), respectivement dans l'étape iii), le recouvrement de chaque profil (15, 15') trapézoïdal isocèle du premier moule (11), respectivement du deuxième moule (11'), par une partie du premier pli (18) préimprégné renforcé par des fibres, respectivement du deuxième pli (18') préimprégné renforcé par des fibres, comprend les étapes suivantes consistant à :
- positionner un premier pli (18) préimprégné renforcé par des fibres, respectivement un deuxième pli (18') préimprégné renforcé par des fibres, sur la surface de moulage (13, 13') du premier moule (11), respectivement du deuxième moule (11'),
- couper ledit premier pli (18) préimprégné renforcé par des fibres, respectivement ledit deuxième pli (18') préimprégné renforcé par des fibres, en tout point correspondant à la distance moyenne entre deux profils (15, 15') trapézoïdaux isocèles adjacents du premier moule (11), respectivement du deuxième moule (11'), de manière telle que lesdites parties du premier pli (18) préimprégné renforcé par des fibres, respectivement du deuxième pli (18') préimprégné renforcé par des fibres, sont générées et de manière telle que lesdites parties du premier pli (18) préimprégné renforcé par des fibres, respectivement du deuxième pli (18') préimprégné renforcé par des fibres, recouvrent chaque profil (15, 15') trapézoïdal isocèle du premier moule (11), respectivement du deuxième moule (11').

18. Procédé pour produire un nid d'abeille composite selon l'une quelconque des revendications 10 à 17, dans lequel, dans l'étape b), les côtés (7) horizontaux des éléments (9) en forme de U des feuilles (3, 4, 5, 6) ondulées sont mis en contact avec les côtés (7) horizontaux des éléments (9) en forme de U de feuilles (3, 4, 5, 6) ondulées adjacentes par retournement respectif d'autres feuilles (3, 4, 5, 6) ondulées adjacentes, dans lequel, dans l'étape b), les côtés (7) horizontaux d'éléments (9) en forme de U de feuilles (3, 4, 5, 6) ondulées sont mis en contact avec les côtés (7) horizontaux d'éléments (9') en forme de U inversé de feuilles (3, 4, 5, 6) ondulées adjacentes par déplacement respectif des autres feuilles (3, 4, 5, 6) ondulées adjacentes, dans lequel, dans l'étape d), lesdits côtés (7) horizontaux de feuilles (3, 4, 5, 6, 20, 21) ondulées mis en contact sont liés de manière concomitante dans leur ensemble par thermodurcissement de ladite pile (30) de feuilles ondulées et dans lequel, dans l'étape d), lesdits côtés (7) horizontaux de feuilles (3, 4, 5, 6, 20, 21) mis en contact sont liés séquentiellement par paire au fur et à mesure qu'une des feuilles (3, 4, 5, 6, 20, 21) ondulées est empilée sur une autre par collage desdits côtés (7) horizontaux mis en contact.
